# EUROPÄISCHE PATENTSCHRIFT

(11) **EP 3 008 975 B1**
(45) Veröffentlichungstag und Bekanntmachung des Hinweises auf die Patenterteilung: **20.01.2021**
(21) Anmeldenummer: 14733573.1
(22) Anmeldetag: 13.06.2014
(51) Int. Cl.: H05B 47/19, H04W 4/70, H04W 12/02, G06F 21/60

(54) **VORRICHTUNG UND VERFAHREN ZUM STEUERN EINES LEUCHTMITTELS**
DEVICE AND METHOD FOR CONTROLLING A LIGHTING MEANS
DISPOSITIF ET PROCÉDÉ DE COMMANDE D'UNE SOURCE LUMINEUSE

(30) Priorität: 13.06.2013 DE 202013005528 U; 13.06.2013 DE 202013005527 U; 28.02.2014 DE 102014102678
(43) Veröffentlichungstag der Anmeldung: 20.04.2016
(73) Patentinhaber: Ice Gateway GmbH, 12489 Berlin (DE)
(72) Erfinder: MOKHTARI, Ramin Lavae, 14471 Potsdam (DE); ASCHEID, Gerd, 52072 Aachen (DE)
(74) Vertreter: Cohausz & Florack
(86) Internationale Anmeldenummer: PCT/EP2014/062393
(87) Internationale Veröffentlichungsnummer: WO 2014/198903

(56) Entgegenhaltungen:
- EP-A1- 2 262 350
- EP-A1- 2 439 495
- US-A1- 2010 029 268
- US-A1- 2012 080 944
- "Datasheet "Murata - DNT2400 FHSS transceiver module"", , 31 December 2010 (2010-12-31), XP055420094, Retrieved from the Internet: URL:http://wireless.murata.com/RFM/data/dn t2400p.pdf [retrieved on 2017-10-30]

## Beschreibung

### Gebiet der Erfindung

Die vorliegende Erfindung betrifft eine Vorrichtung und ein Verfahren zum Steuern eines Leuchtmittels.

### Hintergrund der Erfindung

Im Stand der Technik sind Vorrichtungen zum Steuern eines Leuchtmittels bekannt, die von einer zentralen Steuervorrichtung gesteuert werden können und die einen Prozessor für die Steuerung des Leuchtmittels umfassen. Diese Vorrichtungen finden insbesondere im Außenbereich zur Steuerung von Leuchtmitteln in Straßenlampen Anwendung. Allerdings sind die bekannten Vorrichtungen nur für die Steuerung eines Leuchtmittels geeignet, so dass die gesamte Vorrichtung ausgetauscht werden muss, falls die Straßenlampe auf ein anderes Leuchtmittel umgerüstet werden soll. Außerdem sind die bekannten Vorrichtungen nicht ausreichend vor Manipulationen beispielsweise durch Schadsoftware geschützt und müssen bei einer solchen Manipulation aufwändig vor Ort repariert werden (z.B, indem Speicher und/oder Prozessoren getauscht werden).

Zum Beispiel betrifft die Patentanmeldung EP 2 262 350 A1 eine Beleuchtungseinheit umfassend ein Leuchtelement mit zumindest einer LED, eine Verarbeitungseinheit, einen Umgebungssensor, eine Datenspeichereinheit und eine Zeitregistrierungseinheit, wobei die Verarbeitungseinheit eingerichtet ist, eine Lichtintensität des Leuchtmittels basierend auf einer gewählten Lichtintensität und einem Umgebungsparameter zu steuern. Dabei kann die Beleuchtungseinheit ferner eine drahtlose Übertragungseinheit umfassen, die im 2,4 GHz-Bereich arbeitet und zumindest eine 128-Bit Verschlüsselung verwendet.

Ferner ist aus der Patentanmeldung US 2012/080944 A1 ein Powermanagementsystem für eine Beleuchtungsschaltung mit einem Netzverlagerungscontroller, der einen Prozessor und eine Verbindung zu einer externen Energiequelle umfasst, bekannt.

Die Patentanmeldung US 2010/029268 A1 offenbart außerdem eine Anordnung von Außenleuchten, die überwiegend in unabhängiger Weise betrieben werden, wobei Sensor-, Kommunikations- und Steuerungsprozesse zwischen den verschiedenen Leuchten der Anordnung stattfinden.

### Zusammenfassung einiger beispielhafter Ausgestaltungen der vorliegenden Erfindung

Eine Aufgabe der vorliegenden Erfindung ist es deshalb, die oben genannten Nachteile zu überwinden.

Diese Aufgabe wird gelöst durch den Gegenstand des Hauptanspruchs und der nebengeordneten Ansprüche. Vorteilhafte beispielhafte Ausgestaltungen der Erfindung sind den Unteransprüchen zu entnehmen.

Eine erfindungsgemäße Vorrichtung zum Steuern eines Leuchtmittels umfasst ein oder mehrere Kommunikationsmittel, die eingerichtet sind, erste Daten über zumindest ein drahtloses Kommunikationsnetzwerk zu empfangen und zweite Daten über das zumindest eine drahtlose Kommunikationsnetzwerk zu senden, wobei die Kommunikationsmittel ferner eingerichtet sind, die ersten Daten weiterzuleiten, wobei die weitergeleiteten ersten Daten dritte Daten umfassen, ein oder mehrere Sicherheitsmittel, die eingerichtet sind, die dritten Daten zu entschlüsseln und vierte Daten zu verschlüsseln, wobei die zweiten Daten auf den verschlüsselten vierten Daten beru-hen, und ein oder mehrere Signalverarbeitungsmittel, die eingerichtet sind, ein mit der Vorrichtung verbundenes Leuchtmittel (z.B. ein gleichstrombetriebenes Leuchtmittel) zumindest teilweise in Abhängigkeit von den entschlüsselten dritten Daten zu steuern, wobei die Signalverarbeitungsmittel ferner eingerichtet sind, die vierten Daten zu erzeugen und/oder zu erhalten und die erhaltenen und/oder erzeugten vierten Daten weiterzuleiten.

Ein erfindungsgemäßes Verfahren umfasst das Empfangen von ersten Daten über zumindest ein drahtloses Kommunikationsnetzwerk durch ein oder mehrere Kommunikationsmittel, das Senden von zweiten Daten über das zumindest eine drahtlose Kommunikationsnetzwerk durch die Kommunikationsmittel, das Weiterleiten der ersten Daten, wobei die weitergeleiteten ersten Daten dritte Daten umfassen, das Entschlüsseln der dritten Daten durch ein oder mehrere Sicherheitsmittel, das Steuern eines Leuchtmittels zumindest teilweise in Abhängigkeit von den entschlüsselten dritten Daten durch die Signalverarbeitungsmittel, das Erzeugen und/oder Erhalten von vierten Daten durch die Signalverarbeitungsmittel, das Weiterleiten der erzeugten und/oder erhaltenen vierten Daten durch die Signalverarbeitungsmittel, und das Verschlüsseln der vierten Daten durch die Sicherheitsmittel, wobei die zweiten Daten auf den verschlüsselten vierten Daten beruhen.

Zum Beispiel entsprechen die Kommunikationsmittel der erfindungsgemäßen Vorrichtung den Kommunikationsmitteln des erfindungsgemäßen Verfahrens. Zum Beispiel entsprechen die Signalverarbeitungsmittel der erfindungsgemäßen Vorrichtung den Signalverarbeitungsmitteln des erfindungsgemäßen Verfahrens. Zum Beispiel entsprechen die Sicherheitsmittel der erfindungsgemäßen Vorrichtung den Sicherheitsmitteln des erfindungsgemäßen Verfahrens. Beispielsweise wird das erfindungsgemäße Verfahren von einer erfindungsgemäßen Vorrichtung ausgeführt.

Die Kommunikationsmittel, die Signalverarbeitungsmittel und die Sicherheitsmittel sind zumindest teilweise verschieden. Zum Beispiel sind die Kommunikationsmittel, die Signalverarbeitungsmittel und die Sicherheitsmittel zumindest teilweise verschiedene Mittel der erfindungsgemäßen Vorrichtung. Zum Beispiel sind die Kommunikationsmittel, die Signalverarbeitungsmittel und die Sicherheitsmittel zumindest teilweise als Hardwaremodule und/oder Softwaremodule der erfindungsgemäßen Vorrichtung ausgebildet. Ein Hardwaremodul ist beispielsweise eingerichtet, eine oder mehrere Logikfunktionen auszuführen. Die Logikfunktionen können in einem einmal-programmierbaren Hardwaremodul (unveränderlich) festverdrahtet bzw. festeinprogrammiert sein. Die Logikfunktionen können in einem programmierbaren Hardwaremodul (veränderlich) einprogrammiert sein (z.B. per Firmware und/oder Software).

Ein Hardwaremodul ist beispielsweise eine elektronische Schaltung, ein Prozessor und/oder eine programmierbare logische Schaltung (PLD). Ein Beispiel für einen Prozessor ist ein Universalprozessor, ein Mikroprozessor, eine Mikrokontrolleinheit wie ein Mikrokontroller, ein digitaler Signalprozessor (DSP), eine anwendungsspezifische Integrierte Schaltung (ASIC: Application-Specific Integrated Circuit), ein Field Programmable Gate Array (FPGA) und ein Prozessor mit einem anwendungsspezifischem Befehlssatz (ASIP: Application-Specific Instruction-Set Processor). Zum Beispiel können die Kommunikationsmittel ein Kommunikationsprozessor und/oder eine Kommunikationsschaltung sein. Zum Beispiel können die Sicherheitsmittel ein Sicherheitsprozessor und/oder eine Sicherheitsschaltung sein. Zum Beispiel können die Signalverarbeitungsmittel ein Signalverarbeitungsprozessor und/oder eine Signalverarbeitungsschaltung sein.

Zum Beispiel ist die erfindungsgemäße Vorrichtung durch die Kommunikationsmittel mit dem zumindest einem drahtlosen Kommunikationsnetzwerk verbunden. Zum Beispiel ist die erfindungsgemäße Vorrichtung durch die Kommunikationsmittel derart mit dem zumindest einen drahtlosen Kommunikationsnetzwerk verbunden, dass die ersten Daten über das zumindest eine drahtlose Kommunikationsnetzwerk an der erfindungsgemäßen Vorrichtung empfangen werden können und dass die zweiten Daten von der erfindungsgemäßen Vorrichtung über das zumindest eine drahtlose Kommunikationsnetzwerk gesendet werden können.

Die ersten Daten sind zum Beispiel von einer mit dem zumindest einen drahtlosen Kommunikationsnetzwerk verbundenen Entität (z.B. einer zentralen Steuervorrichtung und/oder einer weiteren Vorrichtung zum Steuern eines Leuchtmittels) über das zumindest eine drahtlose Kommunikationsnetzwerk an die erfindungsgemäße Vorrichtung gesendete Daten. Die zweiten Daten sind zum Beispiel von der erfindungsgemäßen Vorrichtung über das zumindest eine drahtlose Kommunikationsnetzwerk an eine mit dem zumindest einen drahtlosen Kommunikationsnetzwerk verbundene Entität gesendete Daten.

Zum Beispiel sind die Kommunikationsmittel eingerichtet, eine Verbindung zwischen der erfindungsgemäßen Vorrichtung und einer oder mehreren weiteren mit dem zumindest einen drahtlosen Kommunikationsnetzwerk verbundenen Entitäten (z.B. einer zentralen Steuervorrichtung und/oder einer weiteren Vorrichtung zum Steuern eines Leuchtmittels) zumindest teilweise über das drahtlose Kommunikationsnetzwerk herzustellen. Zum Beispiel ist eine solche Verbindung verbindungsorientiert oder verbindungslos. Beispielsweise ist eine solche Verbindung paketvermittelt oder leitungsvermittelt. Zum Beispiel ist eine solche Verbindung eine geschützte Verbindung. Eine geschützte Verbindung ist zum Beispiel eine verschlüsselte Verbindung wie eine SSL-Verbindung (Secure Socket Layer-Verbindung) und/oder eine VPN-Verbindung (Virtual-Private-Network-Verbindung). Zum Beispiel können die ersten und/oder die zweiten Daten über eine solche Verbindung übertragen werden.

Zum Beispiel umfassen die Kommunikationsmittel eine Netzwerkschnittstelle für das zumindest eine drahtlose Kommunikationsnetzwerk. Eine Netzwerkschnittstelle umfasst beispielsweise eine Netzwerkkarte, eine Antenne, ein Netzwerkmodul und/oder ein Modem. Eine Netzwerkschnittstelle kann beispielsweise Module, die direkt auf die Platinen gelötet werden und auch over-the-air diversen Telekommunikationsdiensten zugeordnet werden können, umfassen. Zum Beispiel umfassen die Kommunikationsmittel einen Sender- und/oder Empfänger wie einen WLAN-Sender und/oder - Empfänger, einen RFID-Sender und/oder -Empfänger, einen Bluetooth-Sender und/oder -Empfänger oder einen iBeacon-Sender.

Zum Beispiel umfassen die Kommunikationsmittel einen Prozessor, beispielsweise einen Prozessor, der eingerichtet ist, eine Netzwerkschnittstelle zu steuern. Zum Beispiel umfassen die Kommunikationsmittel zumindest einen Prozessor und zumindest einen Speicher mit Programmanweisungen (z.B. einen Programmspeicher und einen Hauptspeicher), wobei der zumindest eine Speicher und die Programmanweisungen eingerichtet sind, um, zusammen mit dem zumindest einen Prozessor, die Kommunikationsmittel zu veranlassen, das Senden und Empfangen von Daten über das zumindest eine drahtlose Kommunikationsnetzwerk zu steuern. Zum Beispiel ist in dem Speicher ein Betriebssystem (z.B. ein eingebettetes Betriebssystem wie embedded Linux oder Windows CE) gespeichert. Dies ist beispielsweise vorteilhaft, um eine hohe Flexibilität und Erweiterbarkeit der Kommunikationsmittel zu ermöglichen. Zum Beispiel werden solche Betriebssysteme von verschiedenen Herstellern von Netzwerkschnittstellen (z.B. Netzwerkmodulen) unterstützt, so dass die Netzwerkschnittstelle (z.B. die Netzwerkmodule) durch von den Herstellern verfügbare Gerätetreiberprogramme in das Betriebssystem einbezogen werden können. Zum Beispiel ist ferner ein Kommunikationsprogramm mit Programmanweisungen zum Steuern des Sendens und Empfangens von Daten über das zumindest eine drahtlose Kommunikationsnetzwerk in einem Speicher des Prozessor gespeichert.

Ein drahtloses Kommunikationsnetzwerk ist beispielsweise ein Funknetzwerk und/oder ein optisches Netzwerk. Ein Beispiel für ein Funknetzwerk ist ein Mobilfunknetzwerk wie ein GSM-Netzwerk (GSM: Global System for Mobile Communications), ein GPRS-Netzwerk (GPRS: General Packet Radio Service), ein UMTS-Netzwerk (UMTS: Universal Mobile Telecommunications System), ein LTE-Netzwerk (LTE: Long Term Evolution). Ein weiteres Beispiel für ein drahtloses Kommunikationsnetzwerk ist ein drahtloses IEEE 802-Netzwerk wie ein WLAN-Netzwerk (WLAN: Wireless Local Area Network, ein IEEE 802.11-Netzwerk), ein WiMAX-Netzwerk (WiMAX: Worldwide Interoperability for Microwave Access, ein IEEE 802.16-Netzwerk), ein Bluetooth-Netzwerk (ein 802.15.1-Netzwerk) und ein Zigbee-Netzwerk (ein IEEE 802.15.4-Netzwerk). Zum Beispiel ist das zumindest eine drahtlose Kommunikationsnetzwerk ein lokales drahtloses Kommunikationsnetzwerk oder ein nicht-lokales drahtloses Kommunikationsnetzwerk. Ein Beispiel für ein optisches Netzwerk ist ein IrDA-Netzwerk (IrDA: Infrared Data Association). Zum Beispiel ist das drahtlose Kommunikationsnetzwerk zumindest teilweise ein Netzwerk mit einer Mesh-Topologie (Maschen-Topologie). Es sind jedoch auch andere Netzwerk-Topologien denkbar.

Unter Daten sollen zum Beispiel Informationen verstanden werden, die durch einen oder mehrere Prozessoren verarbeitet werden können. Beispielsweise können Daten digitale Informationen und/oder analoge Informationen umfassen. Daten können beispielsweise durch Stromsignale, Spannungssignale, optische Signale und/oder Funksignale übertragen (d.h. gesendet und/oder empfangen) werden. Über eine paketvermittelte Verbindung werden Daten beispielsweise in Form von Datenpaketen übertragen.

Unter zumindest teilweisem Weiterleiten von ersten Daten durch die Kommunikationsmittel soll verstanden werden, dass die Kommunikationsmittel die ersten Daten an die Signalverarbeitungsmittel oder die Sicherheitsmittel senden oder zum Senden an die Signalverarbeitungsmittel oder die Sicherheitsmittel bereitstellen.

Unter Weiterleiten der erzeugten und/oder erhaltenen vierten Daten durch die Signalverarbeitungsmittel soll verstanden werden, dass die Signalverarbeitungsmittel die vierten Daten an die Kommunikationsmittel und/oder die Sicherheitsmittel senden oder zum Senden an die Kommunikationsmittel und/oder die Sicherheitsmittel bereitstellen.

Zum Beispiel sind die Kommunikationsmittel und die Signalverarbeitungsmittel miteinander verbunden (z.B. mittelbar und/oder unmittelbar). Zum Beispiel leiten die Kommunikationsmittel die ersten Daten zumindest teilweise über die Verbindung zwischen den zwischen den Kommunikationsmitteln und den Signalverarbeitungsmitteln weiter. Zum Beispiel leiten die Signalverarbeitungsmittel die vierten Daten zumindest teilweise über die Verbindung zwischen den zwischen den Kommunikationsmitteln und den Signalverarbeitungsmitteln weiter.

Zum Beispiel sind Sicherheitsmittel in der Verbindung zwischen den Kommunikationsmitteln und den Signalverarbeitungsmitteln angeordnet. Zum Beispiel sind Sicherheitsmittel derart in der Verbindung zwischen den Kommunikationsmitteln und den Signalverarbeitungsmitteln angeordnet, dass die zumindest teilweise durch die Kommunikationsmittel weitergeleiteten ersten Daten, die die dritten Daten enthalten, über die Sicherheitsmittel übertragen werden. Zum Beispiel sind Sicherheitsmittel derart in der Verbindung zwischen den Kommunikationsmitteln und den Signalverarbeitungsmitteln angeordnet, dass die durch die Signalverarbeitungsmittel weitergeleiteten vierten Daten über die Sicherheitsmittel übertragen werden. Zum Beispiel sind Sicherheitsmittel derart in der Verbindung zwischen den Kommunikationsmitteln und den Signalverarbeitungsmitteln angeordnet, dass eine Datenübertragung zwischen den Kommunikationsmitteln und den Signalverarbeitungsmittel nur über die Sicherheitsmittel erfolgen kann. Beispielsweise sind die Kommunikationsmittel mit den Sicherheitsmitteln verbunden und die Signalverarbeitungsmittel sind mit den Sicherheitsmitteln verbunden.

Zum Beispiel sind die Verbindungen zwischen den Kommunikationsmitteln, den Signalverarbeitungsmitteln und den Sicherheitsmitteln drahtgebundene Verbindungen. Eine drahtgebundene Verbindung ist zum Beispiel eine leitungsgebundene oder kabelgebundene Verbindung wie eine Mikrostreifenleitungsverbindung, eine Bonddrahtverbindung und/oder eine Koaxialkabelverbindung. Eine drahtgebundene Verbindung kann beispielsweise eine serielle Datenübertragung und/oder eine parallele Datenübertragung ermöglichen.

Die dritten Daten sind zumindest teilweise mit einem symmetrischen, hybriden oder asymmetrischen Verschlüsselungsverfahren verschlüsselt. Zum Beispiel sind die dritten Daten mit einem individuellen Schlüssel entschlüsselbar. Zum Beispiel ist der individuelle Schlüssel nur einer erfindungsgemäßen Vorrichtung (oder einer Gruppe von erfindungsgemäßen Vorrichtungen) zugeordnet und wird nur zur Entschlüsselung von dritten Daten für diese Vorrichtung (oder dieser Gruppe von Vorrichtungen) verwendet. Zum Beispiel sind weiteren erfindungsgemäßen Vorrichtungen (oder weiteren Gruppen von erfindungsgemäßen Vorrichtungen) ebenfalls jeweilige individuelle Schlüssel zugeordnet. Zum Beispiel sind die Sicherheitsmittel eingerichtet, die dritten Daten zu entschlüsseln.

Zum Beispiel sind die vierten durch die Signalverarbeitungsmittel an die Kommunikationsmittel weitergeleiteten Daten unverschlüsselt. Zum Beispiel sind die Sicherheitsmittel eingerichtet, die vierten Daten zumindest teilweise zu verschlüsseln. Zum Beispiel werden die vierten Daten durch die Sicherheitsmittel mit einem individuellen Schlüssel verschlüsselt. Zum Beispiel ist der individuelle Schlüssel nur einer erfindungsgemäßen Vorrichtung (oder einer Gruppe von erfindungsgemäßen Vorrichtungen) zugeordnet und wird nur von dieser Vorrichtung (oder dieser Gruppe von Vorrichtungen) zur Verschlüsselung von vierten Daten verwendet. Zum Beispiel sind weiteren erfindungsgemäßen Vorrichtungen (oder weiteren Gruppen von Vorrichtungen) ebenfalls jeweilige individuelle Schlüssel zugeordnet.

Ein Beispiel für ein symmetrisches Verschlüsselungsverfahren ist das AES-Verschlüsselungsverfahren. Ein symmetrisches Verschlüsselungsverfahren ist unter anderem vorteilhaft, wenn eine große Datenmenge verschlüsselt werden sollen, da es weniger aufwändig als ein asymmetrisches Verschlüsselungsverfahren ist. Ein Beispiel für ein asymmetrisches Verschlüsselungsverfahren ist das RSA-Verschlüsselungsverfahren und/oder das Elliptische-Kurven-Kryptographie-Verschlüsselungsverfahren. Ein asymmetrisches Verschlüsselungsverfahren ist unter anderem vorteilhaft, wenn kleine Datenmengen verschlüsselt werden sollen, da es schwerer anzugreifen (also zu "knacken") ist als ein symmetrisches Verschlüsselungsverfahren.

Zum Beispiel sind die Sicherheitsmittel eingerichtet, die dritten Daten, die in den durch die Kommunikationsmittel weitergeleiteten ersten Daten enthalten sind, zumindest teilweise zu entschlüsseln und die durch die Signalverarbeitungsmittel weitergeleiteten vierten Daten zumindest teilweise zu verschlüsseln. Zum Beispiel sind die Sicherheitsmittel eingerichtet, alle durch die Kommunikationsmittel weitergeleiteten ersten Daten (z.B. alle dritten Daten) zu entschlüsseln und alle durch die Signalverarbeitungsmittel weitergeleiteten vierten Daten zu verschlüsseln. Dies ist beispielsweise vorteilhaft, um die über das zumindest eine drahtlose Kommunikationsnetzwerk übertragenen Daten (z.B. die ersten und zweiten Daten bzw. die dritten und vierten Daten) zu schützen und eine sichere Kommunikation zu ermöglichen. Zwischen den Sicherheitsmitteln und den Kommunikationsmitteln und über das zumindest eine drahtlose Kommunikationsnetzwerk können die Daten dadurch beispielsweise verschlüsselt übertragen werden. Die Sicherheitsmittel können somit ein Endpunkt einer Ende-zu-Ende-Verschlüsselung sein, und der andere Endpunkt der Ende-zu-Ende-Verschlüsselung kann beispielsweise eine zentrale Steuervorrichtung sein. Dadurch kann ein Schutz der zwischen den Signalverarbeitungsmitteln und der zentralen Steuervorrichtung übertragenen Daten gewährleistet werden, unabhängig von der Integrität der Verbindung (und etwaiger Zwischenstationen wie den Kommunikationsmitteln) zwischen den Signalverarbeitungsmitteln und der zentralen Steuervorrichtung.

Zum Beispiel umfassen die Sicherheitsmittel eine programmierbare logische Schaltung, ein Hardware-Sicherheitsmodul und/oder einen Prozessor wie einen Verschlüsselungsprozessor.

Ein Schlüssel zum Entschlüsseln der dritten Daten und/oder ein Schlüssel zum Verschlüsseln der vierten Daten ist/sind derart in den Sicherheitsmitteln einprogrammiert, gespeichert und/oder verdrahtet, dass er/sie nicht durch die Kommunikationsmittel auslesbar sind.. Zum Beispiel können die Schlüssel durch aktivierte Sicherungen und/oder Antisicherungen in einer einmal-programmierbaren logischen Schaltung festverdrahtet sein. Zum Beispiel können die Schlüssel in einem (internen) Nur-Lese Speicher (ROM: Read Only Memory) eines Prozessors festeinprogrammiert und/oder festgespeichert sein. Zum Beispiel sind die Schlüssel derart in den Sicherheitsmitteln einprogrammiert, gespeichert und/oder festverdrahtet, dass sie nicht auslesbar sind. Zum Beispiel sind die Verschlüsselungsfunktion und/oder die Entschlüsselungsfunktion der Sicherheitsmittel in den Sicherheitsmitteln festeinprogrammiert und/oder festverdrahtet. Dies ist beispielsweise vorteilhaft, um zu verhindern, dass die Schlüssel durch Schadsoftware (z.B. Schadsoftware, die von einem Prozessor der Kommunikationsmittel ausgeführt wird) ausgelesen werden können und die Funktionen der Sicherheitsmittel manipuliert werden können.

Unter Steuern eines Leuchtmittels (z.B. eines mit der erfindungsgemäßen Vorrichtung verbundenen Leuchtmittels) durch die Signalverarbeitungsmittel soll zum Beispiel verstanden werden, dass die Signalverarbeitungsmittel das Anschalten, Ausschalten und/oder Dimmen des Leuchtmittels steuern (also veranlassen) können.

Zum Beispiel umfasst die erfindungsgemäße Vorrichtung ein oder mehrere Energieversorgungsmittel. Zum Beispiel sind die Energieversorgungsmittel eingerichtet, das Leuchtmittel mit Energie zu versorgen und/oder Leistung zum Betreiben des Leuchtmittels bereitzustellen. Zum Beispiel sind die Signalverarbeitungsmittel eingerichtet, die Energieversorgungsmittel zu steuern. Zum Beispiel umfassen die Energieversorgungsmittel einen Stromrichter, eine steuerbare Treiberschaltung und/oder einen steuerbaren Spannungswandler (z.B. einen steuerbaren Gleichspannungswandler). Zum Beispiel sind die Signalverarbeitungsmittel mit den Energieversorgungsmitteln verbunden (z.B. drahtgebunden verbunden). Zum Beispiel sind die Energieversorgungsmittel mit dem Leuchtmittel verbunden. Zum Beispiel sind die Signalverarbeitungsmittel über die Energieversorgungsmittel mit dem zumindest einen Leuchtmittel verbunden. Dies ist beispielsweise vorteilhaft, da die Leuchtmittel optimal genutzt werden können, indem sie ohne eigene Energieversorgungsmittel und/oder Steuerungsmittel (z.B. ohne eigene Elektronik) eingesetzt werden. Die notwendige optimale Steuerung der Leuchtmittel und/oder der Energieversorgungsmittel wird beispielsweise durch die Signalverarbeitungsmittel übernommen. Gleichstrom basierte Leuchtmittel können beispielsweise mit einen Gleichstromausgang der Energieversorgungsmittel verbunden werden, und Wechselstrom basierte Leuchtmittel können beispielsweise mit einem Wechselstromausgang (z.B. einem Ausgang eines DALI) der Energieversorgungsmittel verbunden werden.

Unter Steuern eines Leuchtmittels (z.B. eines mit der erfindungsgemäßen Vorrichtung verbundenen Leuchtmittels) durch die Signalverarbeitungsmittel soll zum Beispiel auch verstanden werden, dass die Signalverarbeitungsmittel die Energieversorgungsmittel steuern, um das Anschalten, Ausschalten und/oder Dimmen des Leuchtmittels zu veranlassen können. Zum Beispiel sind die Signalverarbeitungsmittel eingerichtet, das Leuchtmittel über und/oder durch die Energieversorgungsmittel zu steuern.

Zum Beispiel sind die Signalverarbeitungsmittel eingerichtet, das Leuchtmittel in Abhängigkeit der Strom- und Spannungskennwerte des Leuchtmittels, der Kennlinie des Leuchtmittels und/oder der Alterung des Leuchtmittels zu steuern (z.B. indem sie die Energieversorgungsmittel steuern, einen entsprechenden Strom und/oder eine entsprechende Spannung zum Betreiben der Leuchtmittel bereitzustellen).

Zum Beispiel ist ein Steuer- und/oder Signalverarbeitungsprogramm zum Steuern des Leuchtmittels (z.B. eines mit der erfindungsgemäßen Vorrichtung verbundenen Leuchtmittels) in den Signalverarbeitungsmitteln einprogrammiert, gespeichert und/oder verdrahtet. Zum Beispiel umfassen die Signalverarbeitungsmittel einen Prozessor. Zum Beispiel kann das Steuer- und/oder Signalverarbeitungsprogramm in einem Speicher des Prozessors gespeichert und/oder einprogrammiert sein. Zum Beispiel umfassen die Signalverarbeitungsmittel zumindest einen Prozessor und zumindest einen Speicher mit Programmanweisungen (z.B. einen Programmspeicher und einen Hauptspeicher), wobei der zumindest eine Speicher und die Programmanweisungen eingerichtet sind, um, zusammen mit dem zumindest einen Prozessor, die Signalverarbeitungsmittel zu veranlassen, das Leuchtmittel zu steuern. Zum Beispiel ist das Steuer- und/oder Signalverarbeitungsprogramm mit Programmanweisungen zum Steuern eines Leuchtmittels in einem Speicher des Prozessors gespeichert.

Zum Beispiel enthalten die dritten Daten Steueranweisungen einer zentralen Steuervorrichtung für die Signalverarbeitungsmittel zum Steuern eines Leuchtmittels. Steueranweisungen sind zum Beispiel Anweisungen zum Anschalten, Ausschalten und Dimmen eines Leuchtmittels. Dies ist beispielsweise vorteilhaft, um eine Fernsteuerung des Leuchtmittels durch eine zentrale Steuervorrichtung zu ermöglichen.

Zum Beispiel enthalten die dritten Daten Steuerparameter einer zentralen Steuervorrichtung für die Signalverarbeitungsmittel zum Steuern eines Leuchtmittels. Steuerparameter sind zum Beispiel ein Anschaltzeitpunkt, ein Ausschaltzeitpunkt, ein Dimmwert, ein Helligkeitsschwellwert zum Anschalten/Ausschalten, ein Versorgungsspannungswert und ein Versorgungsstromwert. Zum Beispiel können die Signalverarbeitungsmittel (und z.B. die Energieversorgungsmittel durch die Signalverarbeitungsmittel) somit an beliebige Leuchtmittel angepasst werden, indem passende Steuerparameter (z.B. eine passende Intelligenz) über das zumindest eine drahtlose Kommunikationsnetzwerk heruntergeladen werden. Dies ist beispielsweise vorteilhaft, um eine flexible Anpassung und Erweiterung der Steuerung des Leuchtmittels an eine Vielzahl von verschiedenen Leuchtmitteln durch eine zentrale Steuervorrichtung zu ermöglichen.

Zum Beispiel umfasst das Steuer- und/oder Signalverarbeitungsprogramm eine Steuertabelle mit einem oder mehreren Steuerparametern (z.B. einem oder mehreren Anschaltzeitpunkten, einem oder mehreren Ausschaltzeitpunkten und/oder eine oder mehrere Dimmwerte). Zum Beispiel werden die in den dritten Daten enthaltenen Steuerparameter in der Steuertabelle gespeichert. Zum Beispiel sind die Signalverarbeitungsmittel eingerichtet, das Leuchtmittel zumindest teilweise in Abhängigkeit der Steuertabelle zu steuern (z.B. wenn keine Steuerparameter und/oder Steueranweisungen empfangen werden).

Zum Beispiel sind die Steueranweisungen und/oder Steuerparameter in den dritten Daten verschlüsselt enthalten und werden durch die Sicherheitsmittel entschlüsselt. Dies ist beispielsweise vorteilhaft, um die Übertragung der Steueranweisungen und/oder Steuerparameter über das zumindest eine drahtlose Kommunikationsnetzwerk zu schützen und zum Beispiel zu verhindern, dass unberechtigte Dritte Steuerparameter und/oder Steueranweisungen für die Signalverarbeitungsmittel zum Steuern eines Leuchtmittels über das zumindest eine drahtlose Kommunikationsnetzwerk an die Vorrichtung senden können.

Unter Erzeugen von vierten Daten durch die Signalverarbeitungsmittel soll beispielsweise verstanden werden, dass die Signalverarbeitungsmittel die vierten Daten zumindest teilweise durch das Verarbeiten von Daten erhalten. Zum Beispiel sind die vierten Daten das Ergebnis der Verarbeitung von Daten (z.B. der dritten Daten) durch die Signalverarbeitungsmittel. Zum Beispiel sind die vierten Daten das Ergebnis der Verarbeitung der dritten Daten durch die Signalverarbeitungsmittel. Zum Beispiel sind die vierten Daten das Ergebnis der Steuerung des zumindest einem mit der erfindungsgemäßen Vorrichtung verbunden Leuchtmittels durch die Signalverarbeitungsmittel. Zum Beispiel sind die Signalverarbeitungsmittel eingerichtet, alle Steuerereignisse (z.B. Anschalten, Ausschalten, Energieverbrauch) und/oder alle Fehler (z.B. Stromausfall, Ausfall des Leuchtmittels, Kurzschluss) als Steuerinformationen zu protokollieren. Zum Beispiel enthalten die vierten Daten Steuerinformationen der Signalverarbeitungsmittel für eine zentrale Steuervorrichtung. Zum Beispiel sind die Steuerinformationen in den vierten Daten unverschlüsselt enthalten und werden durch die Sicherheitsmittel verschlüsselt. Dies ist beispielsweise vorteilhaft, um die Übertragung der vierten Daten über das zumindest eine drahtlose Kommunikationsnetzwerk zu schützen und zum Beispiel zu verhindern, dass unberechtigte Dritte die vierten Daten abhören können.

Unter Erhalten von vierten Daten durch die Signalverarbeitungsmittel soll beispielsweise verstanden werden, dass die Signalverarbeitungsmittel die vierten Daten zumindest teilweise von einer externen Komponente wie dem zumindest einem Leuchtmittel, einem Sensor, einem Gerät und/oder den Energieversorgungsmitteln erhalten. Zum Beispiel können die Signalverarbeitungsmittel die vierten Daten zumindest teilweise über eine Datenschnittelle empfangen. Ein Beispiel für eine Datenschnittstelle ist eine USB-Schnittstelle, eine IEEE 1394-Schnittstelle, eine CAN-Bus-Schnittstelle, eine Zigbee-Schnittstelle, eine Bluetooth-Schnittstelle, eine serielle Schnittstelle wie eine R232-Schnittstelle und/oder eine parallele Schnittstelle wie eine IEEE 1284-Schnittstelle.

Es ist beispielsweise denkbar, dass die Signalverarbeitungsmittel nur einen Teil der erhaltenen und/oder erzeugten Daten weiterleitet. Nur dieser Teil der erhaltenen und/oder erzeugten Daten sind dann beispielsweise die vierten Daten.

Die erfindungsgemäße Vorrichtung ist beispielsweise mit zumindest einem Leuchtmittel (z.B. einem gleichstrombetriebenen Leuchtmittel) verbindbar. Zum Beispiel umfasst die erfindungsgemäße Vorrichtung Verbindungsmittel zum Verbinden mit zumindest einem Leuchtmittel. Ein Beispiel für ein Verbindungsmittel ist ein Klemmverbinder, ein Steckverbinder, eine Steckdose und eine Leuchtmittelfassung.

Das Leuchtmittel ist vorzugsweise ein Gleichstrom basiertes Leuchtmittel. Zum Beispiel ist das Leuchtmittel ein LED-Leuchtmittel (LED: Light Emitting Diode) und/oder ein OLED-Leuchtmittel (OLED: Organic Light Emitting Diode). Das Leuchtmittel kann jedoch auch ein Wechselstrom basiertes Leuchtmittel sind. Zum Beispiel ist das Leuchtmittel eine Glühbirne und/oder eine Gasentladungslampe.

Das Leuchtmittel ist zum Beispiel ein Teil einer Leuchte. Zum Beispiel ist die erfindungsgemäße Vorrichtung mit einer Leuchte (und deren Leuchtmittel) verbunden. Zum Beispiel umfasst eine Leuchte einen Leuchtenkopf (z.B. ein Leuchtengehäuse) und ein Leuchtmittel. Zum Beispiel umfasst eine Leuchte einen Leuchtenkopf (z.B. ein Leuchtengehäuse), ein Betriebsmittel (z.B. ein Netzteil, einen Spannungswandler und/oder eine Treiberschaltung) und ein Leuchtmittel. Zum Beispiel ist das Leuchtmittel über den Leuchtenkopf und/oder das Betriebsmittel mit der erfindungsgemäßen Vorrichtung verbunden.

Es ist jedoch auch denkbar, dass das Leuchtmittel kein Teil einer Leuchte ist. Zum Beispiel ist das Leuchtmittel unmittelbar mit der erfindungsgemäßen Vorrichtung verbunden.

Vorzugsweise ist die Leuchte eine Leuchte für den Außenbereich und/oder das Leuchtmittel ist ein Leuchtmittel für den Außenbereich. Dementsprechend ist die erfindungsgemäße Vorrichtung vorzugsweise eine Vorrichtung zum Steuern eines Leuchtmittels im Außenbereich. Zum Beispiel ist die erfindungsgemäße Vorrichtung eine Vorrichtung zum Steuern eines Leuchtmittels in einer Straßenlampe.

Die Kommunikationsmittel, die Signalverarbeitungsmittel und die Sicherheitsmittel sind für die Ausführung und/oder Steuerung verschiedener Verfahrensschritte des erfindungsgemäßen Verfahrens verantwortlich. Die Kommunikationsmittel, die Signalverarbeitungsmittel und die Sicherheitsmittel umfassen jeweils zumindest ein unterschiedliches Hardwaremodul. Durch diese Verteilung der Schritte auf unterschiedliche Hardwaremodule der erfindungsgemäßen Vorrichtung ist es möglich, eine besonders sichere, flexible, effiziente und robuste Kommunikation und Datenverarbeitung zu ermöglichen.

Zum Beispiel wird die erfindungsgemäße Vorrichtung in Straßenlampen verwendet. Beispielsweise wird die erfindungsgemäße Vorrichtung zum Um- oder Nachrüsten von Straßenlampen (z.B. einer Straßenlampe mit einem herkömmlichen Leuchtmittel) auf ein LED-Leuchtmittel und/oder eine OLED-Leuchtmittel verwendet. Dies ist beispielsweise vorteilhaft, weil dadurch ohne großen Mehraufwand auch die Steuerung der LED-Lampe mit den oben genannten Vorteilen ermöglicht wird.

Ein erfindungsgemäßes System umfasst zumindest eine zentrale Steuervorrichtung; und zumindest eine erfindungsgemäße Vorrichtung. Eine zentrale Steuervorrichtung ist zum Beispiel eine zentrale Steuervorrichtung eines Betreibers eines Beleuchtungssystems, die eingerichtet ist, eine oder mehrere erfindungsgemäße Vorrichtungen zum Steuern eines Leuchtmittels zu steuern. Eine zentrale Steuervorrichtung sind zum Beispiel ein oder mehrere Entitäten, die zumindest teilweise über das zumindest eine drahtlose Kommunikationsnetzwerk mit der zumindest einen erfindungsgemäßen Vorrichtung verbunden sind. Die zentrale Steuervorrichtung ist beispielsweise zumindest teilweise über das zumindest eine drahtlose Kommunikationsnetzwerk mit einer erfindungsgemäße Vorrichtung oder mehreren erfindungsgemäßen Vorrichtungen verbunden. Eine zentrale Steuervorrichtung sind zum Beispiel ein oder mehrere Server, zum Beispiel ein oder mehrere Server in einer Cloud oder ein oder mehrere Server eines Cloud Services.

Das erfindungsgemäße Computerprogramm umfasst Programmanweisungen, die eine Vorrichtung zur Steuerung und/oder Ausführung des erfindungsgemäßen Verfahrens veranlassen, wenn das erfindungsgemäße Computerprogramm von einem oder mehreren Prozessoren der Vorrichtung ausgeführt wird. Ein Computerprogramm ist beispielsweise über ein Netzwerk verteilbar. Ein Computerprogramm kann zumindest teilweise Software und/oder Firmware eines Prozessors sein. Zum Beispiel umfasst das erfindungsgemäße Computerprogramm ein oder mehrere Unterprogramm wie ein Steuer- und/oder Signalverarbeitungsprogramm und/oder ein Kommunikationsprogramm. Ein Computerprogramm kann beispielsweise eine Cloud-Lösung sein.

Das erfindungsgemäße Computerprogramm kann in einem computerlesbaren Speichermedium gespeichert sein, welches eines oder mehrere erfindungsgemäße Computerprogramme enthält und z.B. als magnetisches, elektrisches, elektromagnetisches, optisches und/oder andersartiges Speichermedium ausgebildet ist. Ein solches computerlesbares Speichermedium ist vorzugsweise gegenständlich (also "berührbar"), zum Beispiel ist es als Datenträgervorrichtung ausgebildet. Eine solche Datenträgervorrichtung ist beispielsweise tragbar oder in einer Vorrichtung fest installiert. Beispiele für eine solche Datenträgervorrichtung sind flüchtige oder nichtflüchtige Speicher mit wahlfreiem-Zugriff (RAM) wie z.B. NOR-Flash-Speicher oder mit sequentiellen-Zugriff wie NAND-Flash-Speicher und/oder Speicher mit Nur-Lese-Zugriff (ROM) oder Schreib-Lese-Zugriff. Computerlesbar soll zum Beispiel so verstanden werden, dass das Speichermedium von einem Computer bzw. einer Datenverarbeitungsanlage (aus)gelesen und/oder beschrieben werden kann, beispielsweise von einem Prozessor.

Die vorliegende Erfindung stellt somit eine flexible und erweiterbare Lösung zum Steuern von Leuchtmitteln insbesondere im Außenbereich bereit. Die vorliegende Erfindung ermöglicht unter anderem eine sichere, flexible, effiziente und robuste Kommunikation und Datenverarbeitung.

Im Folgenden werden beispielhafte Ausgestaltungen der vorliegenden Erfindung beschrieben, welche auf weitere beispielhafte Merkmale der erfindungsgemäßen Vorrichtung, des erfindungsgemäßen Verfahrens, des erfindungsgemäßen Systems und des erfindungsgemäßen Computerprogramms abstellen. Insbesondere sollen durch die Beschreibung eines zusätzlichen Verfahrensschritts des erfindungsgemäßen Verfahrens auch als offenbart gelten Mittel zur Durchführung des Schritts der erfindungsgemäßen Vorrichtung und eine entsprechende Programmanweisung des erfindungsgemäßen Computerprogramms, die eine Vorrichtung zur Ausführung des Verfahrensschritts veranlasst, wenn das Computerprogramm durch einen Prozessor der Vorrichtung ausgeführt wird. Das Gleiche soll auch für die Offenbarung eines Mittels zur Durchführung eines Verfahrensschritts oder einer Programmanweisung gelten, zum Beispiel soll die Offenbarung eines Mittels zur Durchführung eines Verfahrensschritts der erfindungsgemäßen Vorrichtung auch als Offenbarung des entsprechenden Verfahrensschritts des erfindungsgemäßen Verfahrens und einer entsprechenden Programmanweisung des erfindungsgemäßen Computerprogramms verstanden werden.

In beispielhaften Ausgestaltungen der Erfindung werden die dritten Daten vor Erhalt durch die Signalverarbeitungsmittel zumindest teilweise entschlüsselt, und die vierten Daten werden vor Erhalt durch die Kommunikationsmittel zumindest teilweise verschlüsselt. Zum Beispiel sind die Sicherheitsmittel ferner eingerichtet, die dritten Daten vor Erhalt durch die Signalverarbeitungsmittel zumindest teilweise zu entschlüsseln und die vierten Daten vor Erhalt durch die Kommunikationsmittel zumindest teilweise zu verschlüsseln.

Zum Beispiel erhalten die Signalverarbeitungsmittel die dritten Daten über eine Verbindung zwischen den Kommunikationsmitteln und den Signalverarbeitungsmitteln. Zum Beispiel erhalten die Kommunikationsmittel die vierten Daten über eine Verbindung zwischen den Kommunikationsmitteln und den Signalverarbeitungsmitteln. Wie oben beschrieben, sind die Sicherheitsmittel beispielsweise derart in der Verbindung zwischen den Kommunikationsmitteln und den Signalverarbeitungsmitteln angeordnet, dass eine Datenübertragung zwischen den Kommunikationsmitteln und den Signalverarbeitungsmittel nur über die Sicherheitsmittel erfolgen kann.

In beispielhaften Ausgestaltungen der Erfindung sind die Sicherheitsmittel ferner eingerichtet, die Integrität der dritten Daten zumindest teilweise zu überprüfen. Zum Beispiel blockieren die Sicherheitsmittel die dritten Daten, wenn die dritten Daten nicht integer sind. Zum Beispiel blockieren die Sicherheitsmittel die dritten Daten vor Erhalt durch die Signalverarbeitungsmittel, wenn die dritten Daten nicht integer sind. Zum Beispiel sind die dritten Daten signiert. Beispielsweise sind die Sicherheitsmittel eingerichtet, eine Signatur der dritten Daten zu prüfen. Zum Beispiel blockieren die Sicherheitsmittel die dritten Daten, wenn die dritten Daten falsch oder gar nicht signiert sind. Zum Beispiel blockieren die Sicherheitsmittel die dritten Daten vor Erhalt durch die Signalverarbeitungsmittel, wenn die dritten Daten falsch oder gar nicht signiert sind.

In beispielhaften Ausgestaltungen der Erfindung sind die Signalverarbeitungsmittel ferner eingerichtet, Sensordaten von zumindest einem mit der erfindungsgemäßen Vorrichtung verbundenen Sensor zu erhalten, wobei die vierten Daten zumindest teilweise die Sensordaten umfassen. Es ist auch denkbar, dass die erfindungsgemäße Vorrichtung mit mehreren Sensoren verbunden ist. Der zumindest eine mit der erfindungsgemäßen Vorrichtung verbundene Sensor ist zum Beispiel innerhalb der Vorrichtung oder außerhalb der Vorrichtung angeordnet.

Ein Sensor kann zum Beispiel drahtgebunden und/oder drahtlos mit der erfindungsgemäßen Vorrichtung und/oder den Signalverarbeitungsmitteln verbunden sein. Zum Beispiel umfassen die Signalverarbeitungsmittel eine Datenschnittstelle und/oder einen Analog-Digital-Wandler. Ein Beispiel für eine Datenschnittstelle ist, wie oben beschrieben, eine USB-Schnittstelle, eine IEEE 1394-Schnittstelle, eine CAN-Bus-Schnittstelle, eine Zigbee-Schnittstelle, eine Bluetooth-Schnittstelle, eine serielle Schnittstelle wie eine R232-Schnittstelle und/oder eine parallele Schnittstelle wie eine IEEE 1284-Schnittstelle. Zum Beispiel empfangen die Signalverarbeitungsmittel die Sensordaten zumindest teilweise über die Datenschnittstelle. Zum Beispiel erhalten die Signalverarbeitungsmittel die Sensordaten zumindest teilweise durch den Analog-Digital-Wandler. Zum Beispiel sind die Datenschnittstelle und/oder der Analog-Digital-Wandler (drahtgebunden und/oder drahtlos) mit dem Sensor verbunden.

Zum Beispiel sind die Energieversorgungsmittel der erfindungsgemäßen Vorrichtung eingerichtet, den zumindest einen Sensor mit Energie zu versorgen und/oder Leistung zum Betreiben des Sensors bereitzustellen (z.B. über eine drahtgebundene Verbindung zu dem Sensor und/oder über eine drahtgebundene Datenschnittstelle). Zum Beispiel sind die Signalverarbeitungsmittel eingerichtet, die Energieversorgungsmittel entsprechend zu steuern. Dies ist beispielsweise vorteilhaft, da der zumindest eine mit der erfindungsgemäßen Vorrichtung verbunden Sensor keine eigenen Energieversorgungsmittel benötigt.

Die vierten Daten sind zum Beispiel zumindest teilweise Sensordaten von dem zumindest einem mit der erfindungsgemäßen Vorrichtung verbundenen Sensor. Es ist jedoch auch denkbar, dass die vierten Daten die Sensordaten nicht umfassen.

Die Signalverarbeitungsmittel sind beispielsweise eingerichtet, Sensordaten von dem zumindest einem mit der erfindungsgemäßen Vorrichtung verbundenen Sensor zumindest teilweise zu verarbeiten. Unter Verarbeiten der Sensordaten Daten soll beispielsweise das Organisieren und/oder Verändern der Sensordaten verstanden werden. Zum Beispiel sind die Signalverarbeitungsmittel eingerichtet, zumindest einen Signalverarbeitungsalgorithmus auf zumindest einen Teil der Sensordaten anzuwenden. Zum Beispiel umfassen die vierten Daten zumindest teilweise die verarbeiteten Sensordaten oder das Ergebnis des Verarbeitens der Sensordaten (z.B. das Ergebnis des zumindest einen auf die Sensordaten angewendeten Signalverarbeitungsalgorithmus). Dies ist beispielsweise vorteilhaft, um eine (Vor-) Verarbeitung der von dem zumindest einem mit der erfindungsgemäßen Vorrichtung verbundenen Sensor erhaltenen Sensordaten zu ermöglichen und nur die (vor-) verarbeiteten Daten über das zumindest eine drahtlose Kommunikationsnetzwerk an eine zentrale Steuervorrichtung zu senden. Ferner ist dies beispielsweise vorteilhaft, um eine autarke bzw. präventive Logik einzusetzen.

Unter einem Sensor soll beispielsweise ein Gerät (z.B. eine Videokamera) und/oder ein Bauelement (z.B. ein CCD-Sensor und/oder ein CMOS-Sensor), insbesondere ein elektrisches oder elektronisches Bauelement verstanden werden, das eingerichtet ist bestimmte physikalische oder chemische Eigenschaften (z. B.: Strahlung, Temperatur, Feuchtigkeit, Druck, Schall, Helligkeit oder Beschleunigung) und/oder die stoffliche Beschaffenheit seiner Umgebung qualitativ oder als Messgröße quantitativ erfassen kann. Die Größen werden beispielsweise mittels physikalischer oder chemischer Effekte erfasst und in ein weiterverarbeitbares elektrisches Signal umgeformt.

Ein Sensor ist ein Beispiel für ein Gerät. Zum Beispiel ist ein Sensor ein Gerät, das keine eigene Energieversorgung (z.B. kein eigenes Netzteil), kein Funkmodul und/oder keine Intelligenz aufweist.

Es ist auch denkbar, dass die Signalverarbeitungsmittel eingerichtet sind, (allgemeine) Gerätedaten von zumindest einem mit der erfindungsgemäßen Vorrichtung verbundenen Gerät zu erhalten, wobei die vierten Daten zumindest teilweise die Gerätedaten umfassen. Die Gerätedaten können von den Signalverarbeitungsmitteln beispielsweise genauso verarbeitet werden wie die Sensordaten.

Ausführungsbeispiele der vorliegenden Erfindung stellen somit eine flexible und erweiterbare Lösung zum Steuern von Leuchtmitteln und zum Betreiben von Sensoren und Geräten insbesondere im Außenbereich bereit. Die vorliegende Erfindung ermöglicht unter anderem eine sicher, flexible, effiziente und robuste Kommunikation mit der erfindungsgemäßen Vorrichtung, mit den Signalverarbeitungsmitteln und mit zumindest einem mit der erfindungsgemäßen Vorrichtung verbundenen Sensor und eine flexible und effiziente Datenverarbeitung. Die erfindungsgemäße Vorrichtung stellt beispielsweise ein Gateway bzw. eine Gateway-Funktionalität bereit, die von mit der erfindungsgemäßen Vorrichtung verbundenen Sensoren und Geräten benutzt werden kann. Dies ist beispielsweise vorteilhaft, um die Kommunikation über das zumindest eine drahtlose Kommunikationsnetzwerk effizienter gestalten zu können.

In beispielhaften Ausgestaltungen der Erfindung ist der zumindest eine Sensor ein Temperatursensor (z.B. ein Thermometer, ein Thermoelement und/oder ein Thermowiderstand), ein Umgebungstemperatursensor, ein Helligkeitssensor, ein Bewegungssensor (z.B. ein Bewegungsmelder), ein akustischer Sensor, ein Schallsensor (z.B. ein Mikrofon), ein Ultraschallsensor, ein optischer Sensor, ein Infrarotsensor, ein Lichtsensor (z.B. eine Photodiode und/oder ein Photowiderstand), ein Bildsensor (z.B. eine Bildkamera, ein CMOS-Sensor und/oder ein CCD-Sensor), ein Videosensor (z.B. eine Videokamera, ein CMOS-Sensor und/oder ein CCD-Sensor), ein Stromsensor, ein Spannungssensor, ein Leistungssensor, ein chemischer Sensor (z.B. ein Gassensor), ein Explosivstofferkennungssensor, ein Signalsensor (z.B. ein kapazitiver Sensor, ein induktiver Sensor, ein elektro-magnetischer Sensor wie eine Antenne und/oder ein Empfänger), und/oder ein Erschütterungssensor (z.B. ein Erschütterungssensor zur Detektion von Erdbeben).

In beispielhaften Ausgestaltungen der Erfindung sind die Signalverarbeitungsmittel ferner eingerichtet, das mit der erfindungsgemäßen Vorrichtung verbundene Leuchtmittel zumindest teilweise in Abhängigkeit der Sensordaten zu steuern. Zum Beispiel enthält das Steuer- und/oder Signalverarbeitungsprogramm entsprechende Programmanweisungen.

Zum Beispiel ist der zumindest eine mit der erfindungsgemäßen Vorrichtung verbundene Sensor ein Umgebungstemperatursensor und die Sensordaten sind zumindest teilweise Umgebungstemperaturdaten von diesem Sensor. Zum Beispiel sind die Signalverarbeitungsmittel eingerichtet, das mit der erfindungsgemäßen Vorrichtung verbundene Leuchtmittel zumindest teilweise in Abhängigkeit dieser Umgebungstemperaturdaten zu steuern. Beispielsweise kann die von den Energieversorgungsmitteln zum Betreiben des Leuchtmittels bereitgestellte Leistung derart gesteuert werden, dass das Leuchtmittel vor für das Leuchtmittel schädlichen Temperaturen geschützt wird.

Zum Beispiel ist der zumindest eine mit der erfindungsgemäßen Vorrichtung verbundene Sensor ein Bildsensor und die Sensordaten sind zumindest teilweise Bilddaten von diesem Sensor. Zum Beispiel sind die Signalverarbeitungsmittel eingerichtet, das mit der erfindungsgemäßen Vorrichtung verbundene Leuchtmittel zumindest teilweise in Abhängigkeit dieser Bilddaten zu steuern. Zum Beispiel sind die Signalverarbeitungsmittel eingerichtet, einen oder mehrere Bilderverarbeitungsalgorithmen auf die Bilddaten anzuwenden und das mit der erfindungsgemäßen Vorrichtung verbundene Leuchtmittel abhängig vom Ergebnis der Bilderverarbeitungsalgorithmen zu steuern. Beispielsweise können die Signalverarbeitungsmittel das Leuchtmittel bei bestimmten Gefahrensituationen hochdimmen (z.B. wenn erkannt wird, dass ein Kind auf eine Straße läuft).

Zum Beispiel ist der zumindest eine mit der erfindungsgemäßen Vorrichtung verbundene Sensor ein akustischer Sensor (z.B. ein Schallsensor) und die Sensordaten sind zumindest teilweise Audiodaten von diesem Sensor. Zum Beispiel sind die Signalverarbeitungsmittel eingerichtet, das mit der erfindungsgemäßen Vorrichtung verbundene Leuchtmittel zumindest teilweise in Abhängigkeit dieser Audiodaten zu steuern. Zum Beispiel sind die Signalverarbeitungsmittel eingerichtet, einen oder mehrere Datenverarbeitungsalgorithmen auf die Audiodaten anzuwenden und das mit der erfindungsgemäßen Vorrichtung verbundene Leuchtmittel abhängig vom Ergebnis der Datenverarbeitungsalgorithmen zu steuern. Zum Beispiel können diese Datenverarbeitungsalgorithmen die Audiodaten im Hinblick auf den an der erfindungsgemäßen Vorrichtung vorbeifließenden Verkehr auswerten (z.B. die Verkehrsdichte, die Verkehrsrichtung und/oder die Geschwindigkeit). Beispielsweise können die Signalverarbeitungsmittel das Leuchtmittel in bestimmten Verkehrssituationen hoch- oder runterdimmen (z.B. bei hohem Verkehrsaufkommen hochdimmen und bei niedrigem Verkehrsaufkommen runterdimmen).

Zum Beispiel ist der zumindest eine mit der erfindungsgemäßen Vorrichtung verbundene Sensor ein Erschütterungssensor zur Detektion von Erdbeben und die Sensordaten sind zumindest teilweise Erschütterungsmessdaten von diesem Sensor. Zum Beispiel sind die Signalverarbeitungsmittel eingerichtet, das mit der erfindungsgemäßen Vorrichtung verbundene Leuchtmittel zumindest teilweise in Abhängigkeit dieser Erschütterungsmessdaten zu steuern. Zum Beispiel sind die Signalverarbeitungsmittel eingerichtet, einen oder mehrere Datenverarbeitungsalgorithmen auf die Erschütterungsmessdaten anzuwenden. Zum Beispiel können diese Datenverarbeitungsalgorithmen zur Filterung der Erschütterungsmessdaten dienen, zum Beispiel um durch vorbeifließenden Verkehr bedingte Vibrationen aus den Erschütterungsmessdaten heraus zu filtern. Zum Beispiel können dadurch Erschütterungswellen aus allen Richtungen erfasst werden. Zum Beispiel kann das mit der erfindungsgemäßen Vorrichtung verbundene Leuchtmittel zumindest teilweise abhängig vom Ergebnis der Datenverarbeitungsalgorithmen gesteuert werden.

Zum Beispiel ist der zumindest eine mit der erfindungsgemäßen Vorrichtung verbundene Sensor ein Signalsensor, der eingerichtet ist, ein oder mehrere Signale zu erfassen und die Sensordaten sind zumindest teilweise Signaldaten von diesem Sensor. Zum Beispiel ist der Signalsensor eingerichtet, Reflektionen von von der Vorrichtung ausgestrahlten (z.B. wellenförmigen) Signalen zu erfassen. Zum Beispiel sind diese Signale akustische und/oder elektro-magnetische Signale. Elektro-magnetische Signale können beispielsweise Signale (z.B. Funksignale) des ersten und/oder zweiten drahtlosen Kommunikationsnetzwerks sein. Zum Beispiel ist ein Signalsensor zumindest teilweise ein Teil der Kommunikationsmittel (z.B. ein Empfänger). Zum Beispiel sind die Signalverarbeitungsmittel eingerichtet, das mit der erfindungsgemäßen Vorrichtung verbundene Leuchtmittel zumindest teilweise in Abhängigkeit dieser Signaldaten zu steuern. Zum Beispiel sind die Signalverarbeitungsmittel eingerichtet, einen oder mehrere Datenverarbeitungsalgorithmen auf die Signaldaten anzuwenden. Zum Beispiel können diese Datenverarbeitungsalgorithmen zur Erkennung von Objekten dienen, z.B. zur Erkennung von Objekten, die die von der Vorrichtung ausgestrahlten (z.B. wellenförmigen) Signalen zumindest teilweise reflektieren. Zum Beispiel kann das mit der erfindungsgemäßen Vorrichtung verbundene Leuchtmittel zumindest teilweise abhängig vom Ergebnis der Datenverarbeitungsalgorithmen gesteuert werden.

In beispielhaften Ausgestaltungen der Erfindung sind die Signalverarbeitungsmittel ferner eingerichtet, die Sensordaten zumindest teilweise derart zu verarbeiten, dass die Sensordaten zumindest teilweise komprimiert, aufbereitet und/oder ausgewertet werden, wobei die vierten Daten zumindest teilweise die verarbeiteten Sensordaten umfassen.

Zum Beispiel können die Signalverarbeitungsmittel eingerichtet sein, einen oder mehrere Datenkomprimierungsalgorithmen auf die Sensordaten anzuwenden. Ein Beispiel für einen Datenkomprimierungsalgorithmus ist die Lauflängenkodierung und/oder die Huffman-Kodierung. Der angewendete Datenkomprimierungsalgorithmus ist beispielsweise abhängig von der Art der Sensordaten. Zum Beispiel wird auf Videodaten ein Videokompressionsalgorithmus bzw. Videocodec (z.B. MPEG-1, MPEG-2, MPEG-4), auf Audiodaten ein Audiokompressionsalgorithmus bzw. Audiocodec (z.B. MP3, AC-3, WMA) und auf Bilddaten ein Bilddatenkompressionsalgorithmus (z.B. JPEG) angewendet. Zum Beispiel umfassen die vierten Daten zumindest teilweise die komprimierten Sensordaten. Dies ist beispielsweise vorteilhaft, um die Menge der zweiten Daten (die über das zumindest eine drahtlose Kommunikationsnetzwerk gesendet werden) zu reduzieren.

Zum Beispiel können die Signalverarbeitungsmittel eingerichtet sein, einen oder mehrere Datenaufbereitungs- und/oder Datenauswertungsalgorithmen auf die Sensordaten anzuwenden. Ein Beispiel für einen Datenaufbereitungsalgorithmus ist ein Algorithmus zur Verbesserung der Datenqualität (z.B. ein Algorithmus zur Rauschunterdrückung und/oder zur Verbesserung der Bildqualität). Ein Beispiel für einen Datenauswertungsalgorithmus ist ein Algorithmus zur Objekterkennung in Bilddaten und/oder ein Algorithmus zur statistischen Auswertung der Sensordaten (z.B. ein Algorithmus zur Bestimmung des Mittelwerts und/oder der Verteilung von Messdaten). Zum Beispiel umfassen die vierten Daten zumindest teilweise die aufbereiteten und/oder ausgewerteten Sensordaten. Dies ist beispielsweise vorteilhaft, um die Menge der zweiten Daten (die über das zumindest eine drahtlose Kommunikationsnetzwerk gesendet werden) zu reduzieren und/oder den Aufwand einer zentralen Steuervorrichtung zum Aufbereiten und/oder Auswerten der zweiten Daten zu minimieren.

Zum Beispiel können durch einen Datenauswertungsalgorithmus bestimmte Umgebungssituation (wie z.B. ein auf die Straße laufendes Kind und/oder das aktuelle Verkehrsaufkommen) erkannt werden, und durch einen Datenauswertungsalgorithmus können regelmäßig wiederkehrende Umgebungssituationen (wie z.B. ein erhöhtes Verkehrsaufkommen zu einer bestimmten Uhrzeit) erkannt werden. Zum Beispiel sind die Signalverarbeitungsmittel eingerichtet, das mit der erfindungsgemäßen Vorrichtung verbundene Leuchtmittel zumindest teilweise in Abhängigkeit dieser Erkenntnisse zu steuern. Dies ist beispielsweise vorteilhaft, um eine lokale intelligente Steuerung des Leuchtmittels zu ermöglichen.

In beispielhaften Ausgestaltungen der Erfindung sind die Kommunikationsmittel ferner eingerichtet, das Senden der zweiten Daten zumindest teilweise zu steuern. Zum Beispiel sind die Kommunikationsmittel eingerichtet, das Senden der zweiten Daten zumindest teilweise derart zu steuern, dass der Energieaufwand minimiert wird (z.B. der Energieaufwand pro Nutzbit). Zum Beispiel sind die Kommunikationsmittel eingerichtet, das Senden der zweiten Daten zumindest teilweise in Abhängigkeit von der verfügbaren Bandbreite und/oder der Kanalqualität zu steuern. Zum Beispiel sind die Kommunikationsmittel eingerichtet, den Sendezeitpunkt, die Aggregation und/oder die Komprimierungsrate der zweiten Daten zumindest teilweise zu steuern.

Zum Beispiel sind die Kommunikationsmittel eingerichtet, die Komprimierungsrate eines von den Signalverarbeitungsmitteln auf die Sensordaten angewendeten Datenkomprimierungsalgorithmus zu beeinflussen und/oder zu steuern. Zum Beispiel leiten die Kommunikationsmittel entsprechende Daten mit Informationen über eine gewünschte Komprimierungsrate an die Signalverarbeitungsmittel weiter.

Zum Beispiel umfassen die zweiten Daten Daten mit geringer Priorität (z.B. Steuerinformationen) und Daten mit hoher Priorität (z.B. Echtzeitvideodaten). Zum Beispiel sind die Kommunikationsmittel eingerichtet, zweite Daten mit hoher Priorität sofort zu senden und/oder zweite Daten mit geringer Priorität zu einem Zeitpunkt zu senden, zu dem das zumindest eine drahtlose Kommunikationsnetzwerk nur wenig genutzt wird (z.B. nachts).

Zum Beispiel sind die Kommunikationsmittel eingerichtet, zweite Daten vor dem Senden zu aggregieren bzw. zusammenzufassen und beispielsweise erst zu senden, wenn eine bestimmte Datenmenge erreicht ist.

Dies ist beispielsweise vorteilhaft, um eine möglichst effiziente Übertragung der zweiten Daten über das zumindest eine drahtlose Kommunikationsnetzwerk zu ermöglichen.

In beispielhaften Ausgestaltungen der Erfindung sind die Kommunikationsmittel ferner eingerichtet, die ersten Daten über ein erstes drahtloses Kommunikationsnetzwerk (z.B. von einer zentralen Steuervorrichtung) zu empfangen und die zweiten Daten über das erste drahtloses Kommunikationsnetzwerk (z.B. an die zentrale Steuervorrichtung) zu senden, wobei die Kommunikationsmittel ferner eingerichtet sind, fünfte Daten über ein zweites drahtloses Kommunikationsnetzwerk (z.B. von zumindest einer weiteren Vorrichtung zum Steuern eines Leuchtmittels und/oder zumindest einem externen Sensor) zu empfangen und sechste Daten über das zweite drahtlose Kommunikationsnetzwerk (z.B. an die zumindest eine weitere Vorrichtung zum Steuern eines Leuchtmittels und/oder den zumindest einen externen Sensor) zu senden.

Zum Beispiel ist eine zentrale Steuervorrichtung über das erste drahtlose Kommunikationsnetzwerk mit der erfindungsgemäßen Vorrichtung bzw. den Kommunikationsmitteln der erfindungsgemäßen Vorrichtung verbunden. Zum Beispiel ist die Verbindungen über das erste drahtlose Kommunikationsnetzwerk eine geschützte Verbindung wie eine verschlüsselte Verbindung und/oder eine VPN-Verbindung (VPN: virtuelles privates Netzwerk).

Zum Beispiel sind ein oder mehrere externe Sensoren über das zweite drahtlose Kommunikationsnetzwerk mit der erfindungsgemäßen Vorrichtung bzw. den Kommunikationsmitteln der erfindungsgemäßen Vorrichtung verbunden. Externe Sensoren sind beispielsweise Sensoren, die sich außerhalb der erfindungsgemäßen Vorrichtung befinden. Zum Beispiel mobile Sensoren, die sich in einem Fahrzeug befinden. Zum Beispiel sind ein oder mehrere weitere erfindungsgemäße Vorrichtungen über das zweite drahtlose Kommunikationsnetzwerk mit der erfindungsgemäßen Vorrichtung bzw. den Kommunikationsmitteln der erfindungsgemäßen Vorrichtung verbunden. Zum Beispiel sind die Verbindungen über das zweite drahtlose Kommunikationsnetzwerk zumindest teilweise geschützte Verbindung wie verschlüsselte Verbindungen und/oder VPN-Verbindungen.

Zum Beispiel können mehrere erfindungsgemäße Vorrichtungen zum Steuern eines Leuchtmittels eine Gruppe bilden. Zum Beispiel sind die erfindungsgemäßen Vorrichtungen einer Gruppe über das zweite drahtlose Kommunikationsnetzwerk miteinander verbunden (z.B. über jeweilige virtuelle private Netzwerkverbindungen miteinander verbunden). Zum Beispiel ist nicht jede der erfindungsgemäßen Vorrichtungen einer Gruppe mit dem ersten drahtlosen Kommunikationsnetzwerk verbunden. Zum Beispiel ist zumindest eine der erfindungsgemäßen Vorrichtungen einer Gruppe mit dem ersten drahtlosen Kommunikationsnetzwerk verbunden und leitet die über das erste drahtlose Kommunikationsnetzwerk empfangenen ersten Daten zumindest teilweise an die weiteren erfindungsgemäßen Vorrichtungen der Gruppe weiter. Zum Beispiel sind die Verbindungen über das zweite drahtlose Kommunikationsnetzwerk zumindest teilweise geschützte Verbindungen wie verschlüsselte Verbindungen und/oder VPN-Verbindungen. Zum Beispiel umfasst das erfindungsgemäße System eine oder mehrere Gruppen von erfindungsgemäßen Vorrichtungen zum Steuern eines Leuchtmittels.

Zum Beispiel beruhen die sechsten Daten zumindest teilweise auf den ersten Daten. Zum Beispiel umfassen die ersten Daten sechste Daten, die für eine oder mehrere weitere Vorrichtungen zum Steuern eines Leuchtmittels bestimmt sind. Zum Beispiel sind die Kommunikationsmittel eingerichtet, die sechsten Daten für die weiteren Vorrichtungen zum Steuern eines Leuchtmittels über das zweite drahtlose Kommunikationsnetzwerk an die weiteren Vorrichtungen zum Steuern eines Leuchtmittels zu senden.

Zum Beispiel beruhen die zweiten Daten zumindest teilweise auf den fünften Daten. Zum Beispiel umfassen die fünften Daten zumindest teilweise Daten von einer oder mehreren weiteren Vorrichtungen zum Steuern eines Leuchtmittels und/oder Sensordaten von einem externen Sensor. Zum Beispiel sind die Kommunikationsmittel eingerichtet, diese fünften Daten als Teil der zweiten Daten über das erste drahtlose Kommunikationsnetzwerk (z.B. an die zentrale Steuervorrichtung) zu senden.

Ausführungsbeispiele der vorliegenden Erfindung stellen somit eine flexible und erweiterbare Lösung zum Steuern von Leuchtmitteln, zum Betreiben von Sensoren und zur Kommunikation insbesondere im Außenbereich bereit. Ausführungsbeispiele der vorliegenden Erfindung ermöglichen unter anderem eine sicher, flexible, effiziente und robuste Kommunikation mit der erfindungsgemäßen Vorrichtung, mit den Signalverarbeitungsmitteln, mit zumindest einem mit der Vorrichtung verbundenen Sensor und mit weiteren Vorrichtungen zum Steuern eines Leuchtmittels zu ermöglichen (z.B. über das erste und das zweite drahtlose Kommunikationsnetzwerk) und eine flexible und effiziente Datenverarbeitung. Die erfindungsgemäße Vorrichtung stellt beispielsweise ein Gateway bzw. eine Gateway-Funktionalität bereit, die beispielsweise von weiteren Vorrichtungen zum Steuern eines Leuchtmittels und/oder mit der erfindungsgemäßen Vorrichtung verbundenen Sensoren benutzt werden kann. Dies ist beispielsweise vorteilhaft, um die Kommunikation über das erste drahtlose Kommunikationsnetzwerk effizienter gestalten zu können und zum Beispiel mit einer Gruppe von erfindungsgemäßen Vorrichtungen zum Steuern eines Leuchtmittels und/oder mit einem oder mehreren (externen) Sensoren über eine der erfindungsgemäßen Vorrichtungen der Gruppe kommunizieren zu können. Ferner ist dies beispielsweise vorteilhaft, da nur eine geringere Anzahl von Teilnehmern in dem ersten drahtlosen Kommunikationsnetzwerk verwaltet werden muss. Zum Beispiel können mehrere mit der erfindungsgemäßen Vorrichtung verbundene Sensoren und eine Gruppe von erfindungsgemäßen Vorrichtungen dasselbe SIM-Netzwerkmodul einer der erfindungsgemäßen Vorrichtungen zur Kommunikation über das erste drahtlose Kommunikationsnetzwerk verwenden (sogenanntes SIM-Sharing).

Es ist beispielsweise auch denkbar, dass die fünften Daten zumindest teilweise über ein oder mehrere weitere drahtlose Kommunikationsnetzwerke (z.B. ein drittes drahtloses Kommunikationsnetzwerk) empfangen werden und/oder die sechsten Daten zumindest teilweise über ein oder mehrere weitere drahtlose Kommunikationsnetzwerke (z.B. ein drittes drahtloses Kommunikationsnetzwerk) gesendet werden.

In beispielhaften Ausgestaltungen der Erfindung ist das erste drahtlose Kommunikationsnetzwerk ein Teil eines Maschinen-zu-Maschinen-Netzwerks. Zum Beispiel ist das erste drahtlose Kommunikationsnetzwerk ein Mobilfunknetzwerk, das zur Datenübertragung in dem Maschinen-zu-Maschinen-Netzwerk verwendet wird. Maschinen-zu-Maschinen (M2M) steht für den automatisierten Informationsaustausch zwischen Endgeräten wie Sensoren, Maschinen, Automaten, Fahrzeugen oder Containern untereinander und/oder mit einer zentralen Steuervorrichtung, z.B. unter Nutzung des Internets und verschiedener Zugangsnetze wie Mobilfunknetzen.

In beispielhaften Ausgestaltungen der Erfindung ist das zweite drahtlose Kommunikationsnetzwerk ein drahtloses lokales Netzwerk (z.B. ein WLAN und/oder ein Bluetooth-Netzwerk).

In beispielhaften Ausgestaltungen der Erfindung beruhen die zweiten Daten zumindest teilweise auf den fünften Daten. In beispielhaften Ausgestaltungen der Erfindung beruhen die sechsten Daten zumindest teilweise auf den ersten Daten.

In beispielhaften Ausgestaltungen der Erfindung sind die Kommunikationsmittel ferner eingerichtet, einen lokalen Zugangspunkt, insbesondere einen Webserver, bereitzustellen, auf den über das zweite drahtlose Kommunikationsnetzwerk (z.B. über WLAN und/oder Bluetooth oder Freifunk) zugegriffen werden kann.

Zum Beispiel können mobile Kommunikationsendgeräte wie Mobiltelefone (z.B. Smartphones) über das zweite drahtlose Kommunikationsnetzwerk auf den lokalen Zugangspunkt zugreifen. Zum Beispiel können spezielle Anwendungsprogramme für mobile Kommunikationsendgeräte (z.B. APPs) und/oder Browserprogramme einen solchen Zugriff ermöglichen. Zum Beispiel können Informationen (z.B. Tourismusinformationen, Verkehrsinformationen, Nachrichteninformationen) über den lokalen Zugangspunkt zum Herunterladen für mobile Kommunikationsendgeräte über das zweite drahtlose Kommunikationsnetzwerk bereitgestellt werden. Zum Beispiel können die Informationen als Teil der ersten Daten über das erste drahtlose Kommunikationsnetzwerk empfangen werden. Zum Beispiel können die Informationen nur als Teil der ersten Daten über das erste drahtlose Kommunikationsnetzwerk gesendet und empfangen werden, wenn die Auslastung des ersten drahtlosen Kommunikationsnetzwerks gering ist (z.B. zu einer verkehrsgünstigen Zeit). Zum Beispiel stellt der lokale Zugangspunkt eine Programmierschnittstelle (API) zur Verfügung, über die auch Gerätetreiberprogramme von Drittanbietern und/oder Anwendungen von Drittanbietern eingebunden werden können.

Es ist beispielsweise auch denkbar, dass auf den lokalen Zugangspunkt über ein oder mehrere weitere drahtlose Kommunikationsnetzwerke (z.B. ein drittes drahtloses Kommunikationsnetzwerk) zugegriffen werden kann.

In beispielhaften Ausgestaltungen der Erfindung sind das erste drahtlose Kommunikationsnetzwerk und/oder das zweite drahtlose Kommunikationsnetzwerk ein (z.B. bestehendes) externes Netz (z.B. Freifunknetz) und/oder sind die Kommunikationsmittel ferner eingerichtet, einen lokalen Zugangspunkt eines (z.B. bestehenden) externen Netzes bereitzustellen (z.B. eines Netzes mit Internetverbindung, wie z.B. die sogenannten Freifunknetze). Ein Beispiel für ein Netz ist ein drahtloses Kommunikationsnetzwerk, das von einem Netzwerkbetreiber betrieben wird. Beispiele für drahtlose Kommunikationsnetzwerke sind oben gegeben. Unter einem Freifunknetz soll beispielsweise ein nichtkommerziell betriebenes drahtloses Kommunikationsnetzwerk verstanden werden.

In beispielhaften Ausgestaltungen der Erfindung sind die ersten Daten und/oder die zweiten Daten zumindest teilweise verschlüsselt. In beispielhaften Ausgestaltungen der Erfindung sind die fünften und/oder die sechsten Daten zumindest teilweise verschlüsselt.

Gemäß der Erfindung umfassen die Kommunikationsmittel, die Signalverarbeitungsmittel und die Sicherheitsmittel jeweils zumindest ein unterschiedliches Hardwaremodul. Ein Hardwaremodul ist, wie oben beschrieben, beispielsweise eine elektronische Schaltung, ein Prozessor und/oder eine programmierbare logische Schaltung.

Ein Hardwaremodul kann (unveränderlich) einmal-programmierbar sein oder (veränderlich) programmierbar sein. Ein einmal-programmierbares Hardwaremodul ist beispielsweise eine einmal-programmierbare logische Schaltung, in der durch das Aktivieren von Sicherungen und/oder Antisicherungen zumindest eine Logikfunktion festverdrahtet werden kann. Ein einmal programmierbares Hardwaremodul ist beispielsweise ein Prozessor mit einem (internen) Nur-Lese Speicher, wobei in dem Nur-Lese Speicher Programmanweisungen zum Ausführen zumindest einer Logikfunktion gespeichert sind. Ein programmierbares Hardwaremodul ist beispielsweise ein Prozessor mit einem Speicher (z.B. einem Schreib-/Lesespeicher), wobei in dem Speicher

(z.B. dem Schreib-/Lesespeicher) Programmanweisungen zum Ausführen zumindest einer Logikfunktion gespeichert sind.

Ein Hardwaremodul ist beispielsweise eingerichtet, eine oder mehrere Logikfunktionen auszuführen. Die Logikfunktionen können in einem einmal-programmierbaren Hardwaremodul (unveränderlich) festverdrahtet bzw. festeinprogrammiert sein. Die Logikfunktionen können in einem programmierbaren Hardwaremodul (veränderlich) einprogrammiert sein.

Wie oben beschrieben, sind die Kommunikationsmittel, die Signalverarbeitungsmittel und die Sicherheitsmittel für die Ausführung verschiedener Verfahrensschritte des erfindungsgemäßen Verfahrens (z.B. in der bzw. durch die erfindungsgemäße Vorrichtung) verantwortlich. Durch die Verteilung der Verfahrensschritte auf unterschiedliche Hardwaremodule der erfindungsgemäßen Vorrichtung ist es möglich, eine besonders sichere, flexible, effiziente und robuste Kommunikation mit der erfindungsgemäßen Vorrichtung, mit zumindest einem mit der Vorrichtung verbundenen Sensor und mit weiteren Vorrichtungen zum Steuern eines Leuchtmittels zu ermöglichen (z.B. über das erste und das zweite drahtlose Kommunikationsnetzwerk). Ferner erlaubt diese Verteilung eine zumindest teilweise parallele Ausführung der Verfahrensschritte und eine zumindest teilweise parallele Datenverarbeitung, so dass die Datenverarbeitung effizient und flexible ist.

In beispielhaften Ausgestaltungen der Erfindung umfassen die Kommunikationsmittel eine erste Schaltung und die Signalverarbeitungsmittel eine zweite Schaltung und die Sicherheitsmittel eine dritte Schaltung. Zum Beispiel sind die erste Schaltung, die zweite Schaltung und die dritte Schaltung jeweils eine elektronische Schaltung mit zumindest teilweise verschiedenen elektronischen Bauelementen.

In beispielhaften Ausgestaltungen der Erfindung sind die erste Schaltung, die zweite Schaltung und die dritte Schaltung jeweils als integrierte Schaltung ausgebildet, insbesondere als eine anwendungsspezifische integrierte Schaltung.

In beispielhaften Ausgestaltungen der Erfindung umfassen die Kommunikationsmittel einen ersten Prozessor (z.B. einem Universalprozessor]. Zum Beispiel umfassen die Kommunikationsmittel zumindest einen ersten Prozessor und zumindest einen Speicher (z.B. einen Programmspeicher und einen Hauptspeicher). Zum Beispiel sind in dem Speicher ein Betriebssystem (z.B. ein eingebettetes Betriebssystem wie embedded Linux oder Windows CE) und ein Kommunikationsprogramm gespeichert. Zum Beispiel werden solche Betriebssysteme von verschiedenen Herstellern von Netzwerkschnittstellen (z.B. Netzwerkmodulen) unterstützt, so dass eine oder mehrere Netzwerkschnittstellen (z.B. ein Netzwerkmodul) durch von den Herstellern verfügbare Gerätetreiberprogramme in das Betriebssystem einbezogen werden können. Zum Beispiel kann das Kommunikationsprogramm in dem Speicher angepasst und/oder verändert werden. Dies ist beispielsweise vorteilhaft, um eine hohe Flexibilität und Erweiterbarkeit der Kommunikationsmittel zu ermöglichen.

Zum Beispiel ist der erste Prozessor ein ARM-Prozessor (Advanced RISC Machines-Prozessor). ARM-Prozessoren haben eine geringe Leistungsaufnahme und werden von vielen mobilen und/oder eingebetteten Betriebssystemen unterstützt.

In beispielhaften Ausgestaltungen der Erfindung umfassen die Signalverarbeitungsmittel einen zweiten Prozessor (z.B. einen Universalprozessor) und/oder eine FPGA-Schaltung. Zum Beispiel umfassen die Signalverarbeitungsmittel zumindest einen zweiten Prozessor und zumindest einen Speicher. Zum Beispiel ist in dem Speicher ein Betriebssystem (z.B. ein eingebettetes Betriebssystem) und Steuer- und/oder Signalverarbeitungsprogramm gespeichert. Dies ist beispielsweise vorteilhaft, um eine hohe Flexibilität und Erweiterbarkeit der Signalverarbeitungsmittel zu ermöglichen.

Zum Beispiel ist der zweite Prozessor ein ARM-Prozessor. ARM-Prozessoren haben eine geringe Leistungsaufnahme und werden von vielen mobilen und/oder eingebetteten Betriebssystemen unterstützt. Zum Beispiel ist der zweite Prozessor ein Prozessor mit einem anwendungsspezifischen Befehlssatz.

Zum Beispiel umfassen die Signalverarbeitungsmittel zumindest eine FPGA-Schaltung. Zum Beispiel ist in dem Speicher der FPGA-Schaltung ein Steuer- und/oder Signalverarbeitungsprogramm gespeichert, das eine Konfiguration der FPGA-Schaltung für eine entsprechende Logikfunktion vorgibt. FPGA-Schaltungen erlauben eine parallele Verarbeitung von Daten (z.B. im Gegensatz zu Mikrokontrollern, die Daten sequentiell verarbeiten) und sind deshalb gut für Echtzeitanwendungen wie die digitale Signalverarbeitung geeignet. Logikfunktionen können zu einer FPGA-Schaltung hinzugefügt oder von dieser entfernt werden. Die Lebenszeit von FPGA-gestützten Entwicklungen ist länger. Dies ist beispielsweise vorteilhaft, um eine Verarbeitung von Daten durch die Signalverarbeitungsmittel auch für zeitkritische Anwendungen zu ermöglichen.

Es ist beispielsweise auch denkbar, dass die Signalverarbeitungsmittel zumindest zwei oder mehr Prozessoren umfassen. Zum Beispiel umfassen die Signalverarbeitungsmittel eine FPGA-Schaltung und einen zweiten Prozessor wie einen ARM-Prozessor. Dies ist beispielsweise vorteilhaft, um zum einen eine hohe Flexibilität und Erweiterbarkeit der Signalverarbeitungsmittel und zum anderen eine Verarbeitung von Daten durch die Signalverarbeitungsmittel auch für zeitkritischen Anwendungen zu ermöglich. Zum Beispiel können die FPGA-Schaltung und der ARM-Prozessor parallel verschiedene zeitkritische Daten verarbeiten.

In beispielhaften Ausgestaltungen der Erfindung umfassen die Sicherheitsmittel einen Verschlüsselungsprozessor und/oder ein Hardware-Sicherheitsmodul. Ein Verschlüsselungsprozessor und/oder ein Hardware-Sicherheitsmodul ist beispielsweise ein einmal-programmierbares Hardwaremodul. Zum Beispiel sind der Schlüssel zum Entschlüsseln der dritten Daten und/oder der Schlüssel zum Verschlüsseln der vierten Daten in dem Verschlüsselungsprozessor und/oder dem Hardware-Sicherheitsmodul festverdrahtet und/oder festeinprogrammiert. Dies ist beispielsweise vorteilhaft, um eine Manipulation der Sicherheitsmittel zu verhindern.

Ein Hardware-Sicherheitsmodul ist beispielsweise ein gemäß der Serie 140 der "Federal Information Processing Standards (FIPS)" der US Regierungsstandards für Computersicherheit zertifiziertes Hardware-Sicherheitsmodul.

In beispielhaften Ausgestaltungen der Erfindung umfassen die Kommunikationsmittel, die Signalverarbeitungsmittel und die Sicherheitsmittel jeweils zumindest einen unterschiedlichen Schaltungsblock einer integrierten Schaltung, insbesondere einer anwendungsspezifischen integrierten Schaltung. Zum Beispiel kann die anwendungsspezifische integrierte Schaltung den ersten Prozessor als Schaltungsblock der Kommunikationsmittel umfassen. Zum Beispiel kann die anwendungsspezifische integrierte Schaltung den zweiten Prozessor und/oder die FPGA-Schaltung als Schaltungsblock der Signalverarbeitungsmittel umfassen. Zum Beispiel kann die anwendungsspezifische integrierte Schaltung den Verschlüsselungsprozessor und/oder das Hardware-Sicherheitsmodul als Schaltungsblock der Sicherheitsmittel umfassen.

Wegen der Anpassung ihrer Architektur auf eine spezifische Logikfunktion können anwendungsspezifische integrierte Schaltungen sehr effizient und um einiges schneller arbeiten als eine funktionsgleiche Umsetzung per Software in einem Universalprozessor. Ferner erlauben anwendungsspezifische integrierte Schaltungen die Integration von verschiedenen Schaltungsblöcken in einen Baustein. Insbesondere bei hohen Stückzahlen haben anwendungsspezifische integrierte Schaltungen einen Kostenvorteil.

In beispielhaften Ausgestaltungen der Erfindung umfassen die ersten Daten ein oder mehrere Computerprogramme mit Programmanweisungen für die Kommunikationsmittel, die Signalverarbeitungsmittel und/oder die Sicherheitsmittel.

Zum Beispiel umfassen die ersten Daten ein Updateprogramm für ein in einem Speicher der Kommunikationsmittel gespeichertes Kommunikationsprogramm. Zum Beispiel umfasst ein Updateprogramm Programmanweisungen, die einen Prozessor der Kommunikationsmittel (z.B. den ersten Prozessor) veranlassen, wenn sie von dem Prozessor ausgeführt werden, ein in einem Speicher der Kommunikationsmittel gespeichertes Kommunikationsprogramm anzupassen. Dies ist beispielsweise vorteilhaft, um eine flexible Anpassung und Erweiterung des Kommunikationsprogramms durch eine zentrale Steuervorrichtung zu ermöglichen.

Zum Beispiel umfassen die ersten Daten ein Updateprogramm für ein in einem Speicher der Signalverarbeitungsmittel gespeichertes Steuer- und Signalverarbeitungsprogramm. Zum Beispiel umfasst das Updateprogramm Programmanweisungen, die einen Prozessor der Signalverarbeitungsmittel (z.B. den zweiten Prozessor) veranlassen, wenn sie von dem Prozessor ausgeführt werden, ein in einem Speicher der Signalverarbeitungsmittel gespeichertes Steuer- und Signalverarbeitungsprogramm anzupassen. Zum Beispiel kann das Updateprogramm einen neuen Signalverarbeitungsalgorithmus und/oder ein Gerätetreiberprogramm für einen mit der erfindungsgemäßen Vorrichtung verbundenen Sensor umfassen. Zum Beispiel können die Signalverarbeitungsmittel somit an beliebige Sensoren angepasst werden, indem passende Signalverarbeitungsalgorithmen und/oder Gerätetreiberprogramme über das zumindest eine drahtlose Kommunikationsnetzwerk heruntergeladen werden. Zum Beispiel kann das Updateprogramm geeignete Steuerparameter für ein mit der erfindungsgemäßen Vorrichtung verbundenes Leuchtmittel umfassen. Dies ist beispielsweise vorteilhaft, um eine flexible Anpassung und Erweiterung des Steuer- und/oder Signalverarbeitungsprogramms durch eine zentrale Steuervorrichtung an eine Vielzahl von verschiedenen Leuchtmitteln zu ermöglichen. Zum Beispiel kann das Steuer- und/oder Signalverarbeitungsprogramm an die Kennlinie eines Leuchtmittels und/oder den Leistungsbedarf (Spannungsversorgung und/oder Stromversorgung) eines Leuchtmittels angepasst werden, so dass die erfindungsgemäße Vorrichtung mit einer Vielzahl von verschiedenen Leuchtmitteln verbunden werden kann. Zum Beispiel können die Signalverarbeitungsmittel (und z.B. die Energieversorgungsmittel durch die Signalverarbeitungsmittel) somit an beliebige Leuchtmittel angepasst werden, indem passende Steuerparameter (z.B. eine passende Intelligenz) über das zumindest eine drahtlose Kommunikationsnetzwerk heruntergeladen werden.

In beispielhaften Ausgestaltungen der Erfindung sind die Signalverarbeitungsmittel und/oder die Sicherheitsmittel ferner eingerichtet, die Kommunikationsmittel zurückzusetzen. Zum Beispiel sind die Signalverarbeitungsmittel und/oder die Sicherheitsmittel eingerichtet, den Zustand der Kommunikationsmittel zu überwachen und, wenn sich die Kommunikationsmittel in einem unsicheren Zustand befinden, zurückzusetzen. Zum Beispiel sind die Signalverarbeitungsmittel und/oder die Sicherheitsmittel eingerichtet, eine Zurücksetzung der Kommunikationsmittel in den Auslieferungszustand zu veranlassen bzw. zu steuern. Beispielsweise kann ein in einem Speicher der Kommunikationsmittel gespeichertes Betriebssystem und/oder Kommunikationsprogramm in den Auslieferungszustand zurückgesetzt werden. Zum Beispiel kann eine Sicherheitskopie des Betriebssystems und/oder des Kommunikationsprogramms im Auslieferungszustand in einem Nur-Lese-Speicher der Kommunikationsmittel gespeichert sein.

Zum Beispiel umfassen die die Signalverarbeitungsmittel und/oder die Sicherheitsmittel sowie die Kommunikationsmittel eine Watchdog-Funktionalität zur Überwachung der Kommunikationsmittel. Zum Beispiel sind die Kommunikationsmittel eingerichtet, regelmäßig eine Zustandsmeldung an die Signalverarbeitungsmittel und/oder die Sicherheitsmittel zu senden und/oder regelmäßig erste Daten an die Signalverarbeitungsmittel weiterzuleiten. Zum Beispiel veranlassen die Sicherheitsmittel und/oder die Signalverarbeitungsmittel ein Zurücksetzen der Kommunikationsmittel, wenn eine solche regelmäßige Sendung und/oder Weiterleitung ausbleibt. Zum Beispiel können die ersten Daten auch eine Steueranweisung für die Signalverarbeitungsmittel zum Zurücksetzen der Kommunikationsmittel umfassen.

Dies ist beispielsweise vorteilhaft, um zu gewährleisten, dass die Kommunikationsmittel auch nach einem Absturz, einem fehlerhaften Updateprogramm und/oder einem Befall mit Schadsoftware (automatisch oder aus der Ferne) in einen funktionsfähigen Zustand zurückgesetzt werden können.

In beispielhaften Ausgestaltungen der Erfindung umfasst die erfindungsgemäße Vorrichtung ferner ein oder mehrere Energieversorgungsmittel, die eingerichtet sind, die Kommunikationsmittel, und die Signalverarbeitungsmittel und die Sicherheitsmittel und das mit der erfindungsgemäßen Vorrichtung verbundene Leuchtmittel mit Energie zu versorgen.

Zum Beispiel sind die Energieversorgungsmittel eingerichtet, für die Energieversorgung des mit der erfindungsgemäßen Vorrichtung verbundenen Leuchtmittels eine Leistung in einem Bereich zwischen zumindest 1 Watt und 1000 Watt bereitzustellen, wobei die Signalverarbeitungsmitteln eingerichtet sind, die Energieversorgung des Leuchtmittels durch die Energieversorgungsmittel zumindest teilweise zu steuern. Zum Beispiel sind die Energieversorgungsmittel eingerichtet, mit der erfindungsgemäßen Vorrichtung verbundene Sensoren mit Energie zu versorgen, wobei die Energieversorgungsmittel ferner eingerichtet sind, für die Energieversorgung mit der Vorrichtung verbundene Sensoren eine Leistung in einem Bereich zwischen zumindest 1 Watt und 1000 Watt bereitzustellen.

Zum Beispiel umfassen die Energieversorgungsmittel ein Netzteil, das eingerichtet ist die erfindungsgemäße Vorrichtung mit Energie zu versorgen. Zum Beispiel ist die Eingangsspannung des Netzteils eine Wechselspannung, z.B. eine zweiphasige Wechselspannung im Niederspannungsbereich zwischen 0V und 1000V. Zum Beispiel ist die Eingangsspannung eine Wechselspannung mit einer Nennspannung von 230 Volt und einer Frequenz von 50 Hertz. Zum Beispiel ist die Ausgangsspannung des Netzteils eine Gleichspannung im Kleinspannungsbereich zwischen 0 und 120 Volt, vorzugsweise zwischen 0 und 75 Volt. Zum Beispiel ist die Ausgangsspannung eine Gleichspannung mit 65 Volt. Zum Beispiel ist das Netzteil ein Transformatornetzteil und/oder ein Schaltnetzteil.

Zum Beispiel umfassen die Energieversorgungsmittel nur ein Netzteil, das eingerichtet ist die erfindungsgemäße Vorrichtung, mit der erfindungsgemäßen Vorrichtung verbundene Sensoren und Geräte und das zumindest eine mit der erfindungsgemäßen Vorrichtung verbundene Leuchtmittel mit Energie zu versorgen.

Zum Beispiel umfassen die Energieversorgungsmittel ferner einen Gleichspannungswandler, der eingerichtet ist, die Ausgangsspannung des Netzteils herabzusetzen. Zum Beispiel ist die Eingangsspannung des Gleichspannungswandlers die Ausgangsspannung des Netzteils. Zum Beispiel ist die Ausgangsspannung des Gleichspannungswandlers eine Gleichspannung im Kleinspannungsbereich zwischen 0 und 12 Volt. Zum Beispiel ist die Ausgangsspannung des Gleichspannungswandlers eine Gleichspannung mit 5 Volt. Zum Beispiel ist die Ausgangsspannung des Gleichspannungswandlers eine Spannung, die zum Betrieb der Kommunikationsmittel, der Signalverarbeitungsmittel, der Sicherheitsmittel und/oder von mit der Vorrichtung verbundenen Sensoren geeignet ist. Zum Beispiel werden die Kommunikationsmittel, die Signalverarbeitungsmittel, die Sicherheitsmittel und/oder ein oder mehrere mit der Vorrichtung verbundene Sensoren über den Gleichspannungswandler von dem Netzteil mit Energie versorgt. Zum Beispiel ist der Gleichspannungswandler ferner eingerichtet, die Kommunikationsmittel, die Signalverarbeitungsmittel, die Sicherheitsmittel und ein oder mehrere mit der Vorrichtung verbundene Sensoren von dem Netzteil, einer Treiberschaltung und einem mit der Vorrichtung verbundenen Leuchtmittel galvanisch zu trennen.

Zum Beispiel umfassen die Energieversorgungsmitte ferner eine Treiberschaltung, die eingerichtet ist, eine Leistung zum Betreiben des zumindest eine mit der Vorrichtung verbundene Leuchtmittels bereitzustellen. Zum Beispiel ist die Eingangsspannung der Treiberschaltung die Ausgangsspannung des Netzteils. Zum Beispiel ist die Ausgangsleistung der Treiberschaltung in einem Bereich von 1 bis 1000 Watt steuerbar. Zum Beispiel ist der Ausgangsstrom der Treiberschaltung steuerbar. Zum Beispiel ist die Treiberschaltung von den Signalverarbeitungsmittel steuerbar. Zum Beispiel ist die Treiberschaltung eingerichtet, einen konstanten Ausgangsstrom und/oder einen modulierten Ausgangsstrom, insbesondere eine Pulsweiten modulierten Ausgangsstrom zum Betreiben des zumindest einen mit der Vorrichtung verbunden Leuchtmittels bereitzustellen. Zum Beispiel wird das zumindest eine mit der Vorrichtung verbunden Leuchtmittel über die Treiberschaltung von dem Netzteil mit Energie versorgt. Zum Beispiel ist die Treiberschaltung ein sogenannter Buck-Boost Konverter. Ein Beispiel für eine Treiberschaltung ist die LT3791-Treiberschaltung der Firma Linear Technology.

Zum Beispiel umfassen die Energieversorgungsmittel, das Netzteil, den Gleichspannungswandler und die Treiberschaltung. Vorzugsweise umfassen die Energieversorgungsmittel, wie oben beschrieben, nur ein Netzteil. Dies ist beispielsweise vorteilhaft, um lediglich ein Netzteil zur Versorgung der verschiedenen Mittel bzw. Komponenten zu benötigen. Zum Beispiel kann das Netzteil bei der Verwendung in einer Straßenlampe im Mast angeschlossen werden, so dass im oberen Bereich der Straßenlampe nur noch (ungefährliche) Kleinspannungen anliegen. Dies ist beispielsweise vorteilhaft, da in einem solchen Kleinspannungsbereich viele Sicherheitsrichtlinien entfallen. Zum Beispiel können dann beispielsweise auch Personen ohne Elektrikerzulassung Sensoren und Geräte mit der erfindungsgemäßen Vorrichtung verbinden.

In einer alternativen Ausführungsform der Erfindung umfasst eine alternative erfindungsgemäße Vorrichtung zum Steuern eines Leuchtmittels ein oder mehrere Kommunikationsmittel, die eingerichtet sind, erste Daten über zumindest ein drahtloses Kommunikationsnetzwerk zu empfangen und zweite Daten über das zumindest eine drahtlose Kommunikationsnetzwerk zu senden, ein oder mehrere Signalverarbeitungsmittel, die eingerichtet sind, ein mit der erfindungsgemäßen Vorrichtung verbundenes Leuchtmittel zumindest teilweise in Abhängigkeit von durch die Kommunikationsmittel an die Signalverarbeitungsmittel weitergeleiteten ersten Daten zu steuern, wobei die Signalverarbeitungsmittel ferner eingerichtet sind, dritte Daten an die Kommunikationsmittel weiterzuleiten, und ein oder mehrere Energieversorgungsmittel, die eingerichtet sind, die Kommunikationsmittel, und die Signalverarbeitungsmittel und die Sicherheitsmittel und das mit der Vorrichtung verbundene Leuchtmittel mit Energie zu versorgen.

Der Unterschied zwischen der alternativen Ausführungsform der Erfindung und der zuvor beschriebenen erfindungsgemäßen Vorrichtung besteht darin, dass gemäß der erfindungsgemäßen Vorrichtung der alternativen Ausführungsform der Erfindung die alternative erfindungsgemäße Vorrichtung statt der Sicherheitsmittel die Energieversorgungsmittel umfasst. Die Sicherheitsmittel sind lediglich ein optionales Merkmal der alternativen erfindungsgemäßen Vorrichtung der alternativen Ausführungsform der Erfindung. Abgesehen von diesem Unterschied, sollen die zuvor für die erfindungsgemäße Vorrichtung beschriebenen Merkmale, Definitionen und beispielhaften Ausgestaltungen auch als Offenbarung entsprechender Merkmale, Definitionen und beispielhafter Ausgestaltungen der alternativen erfindungsgemäßen Vorrichtung der alternativen Ausführungsform der Erfindung verstanden werden. Insbesondere soll dies für die Beschreibung der Kommunikationsmittel, der Signalverarbeitungsmittel und der Energieversorgungsmittel gelten.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen.

Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Zeichnungen

In den Figuren zeigen:
- Fig. 1a:: ein Blockdiagramm einer beispielhaften Ausführungsform der erfindungsgemäßen Vorrichtung;
- Fig. 1b:: ein Blockdiagramm einer beispielhaften Ausführungsform der Kommunikationsmittel der erfindungsgemäßen Vorrichtung;
- Fig. 1c:: ein Blockdiagramm einer beispielhaften Ausführungsform der Signalverarbeitungsmittel der erfindungsgemäßen Vorrichtung;
- Fig. 2:: ein Blockdiagramm einer beispielhaften Ausführungsform des erfindungsgemäßen Systems; und
- Fig. 3a - 3e:: Ablaufdiagramme mit Schritten beispielhafter Ausführungsformen des erfindungsgemäßen Verfahrens.

### Detaillierte Beschreibung einiger beispielhafter Ausführungsformen der vorliegenden Erfindung

Die vorliegende Erfindung wird im Folgenden anhand von beispielhaften Ausführungsformen beschrieben.

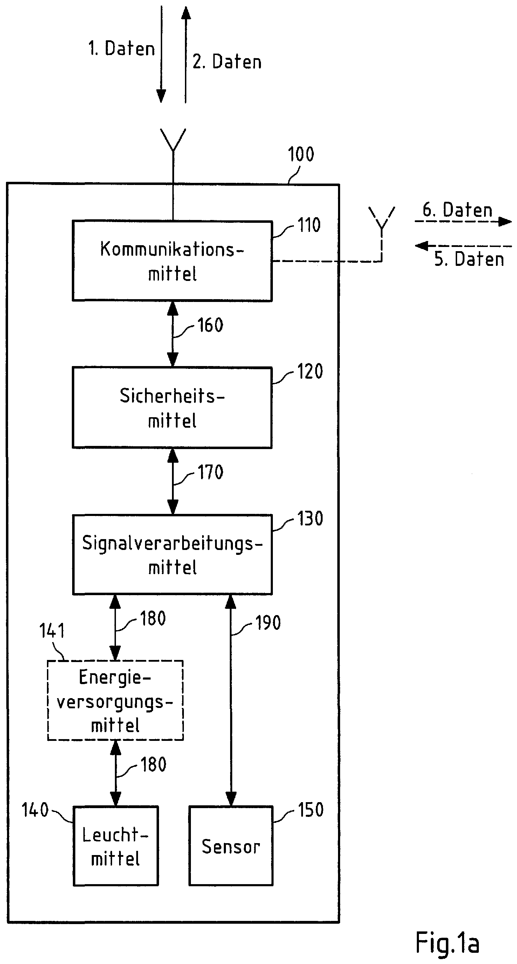

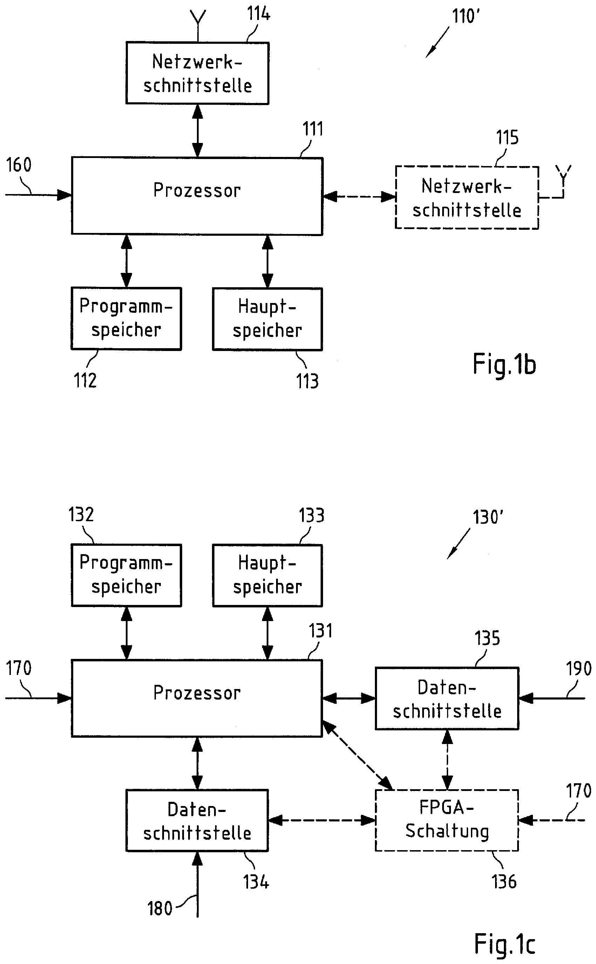

Fig. 1 zeigt ein Blockdiagramm einer beispielhaften Ausführungsform der erfindungsgemäßen Vorrichtung zum Steuern einer Leuchtmittels 100. Die Vorrichtung 100 umfasst ein oder mehrere Kommunikationsmittel 110, ein oder mehrere Sicherheitsmittel 120 und ein oder mehrere Signalverarbeitungsmittel 130. Ferner ist die Vorrichtung mit einem Leuchtmittel 140 und einem Sensor 150 verbunden. Zum Beispiel sind das Leuchtmittel 140 und der Sensor 150, wie in Fig. 1 dargestellt, innerhalb der Vorrichtung 100 angeordnet. Es ist jedoch auch denkbar, dass das Leuchtmittel 140 und/oder der Sensor 150 außerhalb der Vorrichtung 100 angeordnet sind. Ferner ist denkbar, dass die Vorrichtung 100 mit mehreren Leuchtmitteln 140 und/oder mehreren Sensoren 150 verbunden ist.

Die Kommunikationsmittel 110 sind über eine Verbindung 160 mit den Sicherheitsmitteln 120 verbunden. Die Sicherheitsmittel 120 sind über eine Verbindung 170 mit den Signalverarbeitungsmitteln 130 verbunden. Eine direkte Verbindung zwischen den Kommunikationsmitteln 110 und den Signalverarbeitungsmitteln 130 besteht beispielsweise nicht. Die Signalverarbeitungsmittel 130 sind über die Verbindung 180 mit dem Leuchtmittel 140 und über die Verbindung 190 mit dem Sensor 150 verbunden. Zum Beispiel sind die Verbindungen 160, 170, 180 und 190 drahtgebundene Verbindungen, über die Daten übertragen werden können. Eine drahtgebundene Verbindung ist zum Beispiel eine leitungsgebundene oder kabelgebundene Verbindung wie eine Mikrostreifenleitungsverbindung, eine Bonddrahtverbindung, eine Koaxialkabelverbindung. Eine drahtgebundene Verbindung kann beispielsweise eine serielle Datenübertragung und/oder eine parallele Datenübertragung ermöglichen.

Die Vorrichtung 100 umfasst ein oder mehrere optionale Energieversorgungsmittel 141 für das Leuchtmittel. Die Energieversorgungsmittel 141 sind in der Verbindung 180 zwischen den Signalverarbeitungsmitteln 130 und dem Leuchtmittel 140 angeordnet, so dass die Signalverarbeitungsmittel 130 über die Verbindung 180 und die Energieversorgungsmittel 141 mit dem Leuchtmittel 140 verbunden sind.

Zum Beispiel sind die Energieversorgungsmittel 141ein Betriebsmittel einer Leuchte, die das Leuchtmittel 140 umfasst. Vorzugsweise sind die Energieversorgungsmittel 141 jedoch kein Teil einer Leuchte.

Zum Beispiel umfassen die Kommunikationsmittel 110, die Signalverarbeitungsmittel 130 und die Sicherheitsmittel 120 jeweils zumindest ein unterschiedliches Hardwaremodul. Ein Hardwaremodul ist, wie oben beschrieben, beispielsweise eine elektronische Schaltung, ein Prozessor und/oder eine programmierbare logische Schaltung. Ein Hardwaremodul ist beispielsweise eingerichtet, eine oder mehrere Logikfunktionen auszuführen. Ein Hardwaremodul kann einmal-programmierbar sein oder (veränderlich) programmierbar sein. Die Kommunikationsmittel 110, die Signalverarbeitungsmittel 130 und die Sicherheitsmittel 120 sind beispielsweise für die Ausführung und/oder Steuerung verschiedener Verfahrensschritte des erfindungsgemäßen Verfahrens verantwortlich. Zum Beispiel umfassen die Kommunikationsmittel 110, die Signalverarbeitungsmittel 130 und die Sicherheitsmittel 120 jeweils zumindest einen unterschiedlichen Schaltungsblock einer integrierten Schaltung, insbesondere einer anwendungsspezifischen integrierten Schaltung.

Die Sicherheitsmittel 120 umfassen beispielsweise ein Hardware-Sicherheitsmodul. Zum Beispiel entschlüsselt das Hardware-Sicherheitsmodul über Verbindung 160 empfangene Daten und sendet die entschlüsselten Daten über Verbindung 170 weiter. Zum Beispiel verschlüsselt das Hardware-Sicherheitsmodul über Verbindung 170 empfangene Daten und sendet die verschlüsselten Daten über Verbindung 160 weiter. Ferner können die Sicherheitsmittel 120 beispielsweise auch die Integrität der Daten überprüfen. Dies ist beispielsweise vorteilhaft, um eine sichere Kommunikation mit den Signalverarbeitungsmitteln 130 zu ermöglichen, da die Daten nur über Verbindung 170 zwischen den Sicherheitsmitteln 120 und den Signalverarbeitungsmitteln 130 unverschlüsselt übertragen werden. Die Sicherheitsmittel 120 können somit ein Endpunkt einer Ende-zu-Ende-Verschlüsselung sein.

Zum Beispiel sind ein Schlüssel zum Entschlüsseln der Daten und ein Schlüssel zum Verschlüsseln der Daten in dem Hardware-Sicherheitsmodul festeinprogrammiert und/oder festverdrahtet. Zum Beispiel sind die Verschlüsselungsfunktion und die Entschlüsselungsfunktion in dem Hardware-Sicherheitsmodul festeinprogrammiert und/oder festverdrahtet. Zum Beispiel können die Schlüssel, die Verschlüsselungsfunktion und die Entschlüsselungsfunktion durch aktivierte Sicherungen und/oder Antisicherungen in einer einmal-programmierbaren logischen Schaltung des Hardware-Sicherheitsmoduls festverdrahtet sein. Ein Hardware-Sicherheitsmodul ist beispielsweise ein gemäß der Serie 140 der "Federal Information Processing Standards (FIPS)" der US Regierungsstandards für Computersicherheit zertifiziertes Hardware-Sicherheitsmodul.

Zum Beispiel sind die Sicherheitsmittel 120 zumindest teilweise als Schaltungsblock einer anwendungsspezifischen integrierten Schaltung ausgebildet. Zum Beispiel sind die Sicherheitsmittel 120 zumindest teilweise als Schaltungsblock einer anwendungsspezifischen integrierten Schaltung ausgebildet, die ferner einen Schaltungsblock der Kommunikationsmittel 110 und einen Schaltungsblock der Signalverarbeitungsmittel 130 umfasst. Zum Beispiel ist das Hardware-Sicherheitsmodul Teil eines solchen Schaltungsblocks.

Zum Beispiel sind die Energieversorgungsmittel 141 eingerichtet, das Leuchtmittel 140 mit Energie zu versorgen und/oder Leistung zum Betreiben des Leuchtmittels 140 bereitzustellen. Zum Beispiel umfassen die Energieversorgungsmittel 141 eine steuerbare Treiberschaltung und/oder einen steuerbaren Spannungswandler (z.B. einen steuerbaren Gleichspannungswandler). Zum Beispiel sind die Energieversorgungsmittel 141 zumindest teilweise steuerbar. Zum Beispiel ist das Leuchtmittel 140 über die Energieversorgungsmittel 141 steuerbar. Zum Beispiel ist das Leuchtmittel 140 durch die Signalverarbeitungsmittel 130 über die Energieversorgungsmittel 141 steuerbar.

Das Leuchtmittel 140 ist beispielsweise ein LED-Leuchtmittel und/oder ein OLED-Leuchtmittel. Zum Beispiel ist das Leuchtmittel 140 ein Gleichstrom basiertes Leuchtmittel. Vorzugsweise ist das Leuchtmittel ein Leuchtmittel für den Außenbereich. Zum Beispiel ist das Leuchtmittel 140 ein Leuchtmittel für eine Straßenlampe.

Der Sensor 150 ist beispielsweise ein Temperatursensor, ein Umgebungstemperatursensor, ein Helligkeitssensor, ein Bewegungssensor, ein akustischer Sensor, ein Schallsensor, ein Ultraschallsensor, ein optischer Sensor, ein Infrarotsensor, ein Lichtsensor, ein Bildsensor, ein Videosensor, ein Stromsensor, ein Spannungssensor, ein Leistungssensor, ein Explosivstofferkennungssensor und/oder ein Erschütterungssensor.

Die Vorrichtung 100 ist zum Beispiel eine Vorrichtung zum Steuern eines Leuchtmittels im Außenbereich. Die Vorrichtung 100 ist zum Beispiel eine Vorrichtung zum Steuern eines Leuchtmittels in einer Straßenlampe. Beispielsweise wird die Vorrichtung 100 zum Um- oder Nachrüsten von Straßenlampen mit einer herkömmlichen Lampe auf eine LED-Lampe verwendet. Zum Beispiel wird die Vorrichtung 100 in Straßenlampen verwendet.

Fig. 1b zeigt ein Blockdiagramm einer beispielhaften Ausführungsform der Kommunikationsmittel 110' einer erfindungsgemäßen Vorrichtung. Die Kommunikationsmittel 110 der erfindungsgemäßen Vorrichtung 100 entsprechen beispielsweise den Kommunikationsmitteln 110'.

Die Kommunikationsmittel 110' umfassen einen Prozessor 111 mit einem Programmspeicher 112 und einem Hauptspeicher 113. Ferner umfassen die Kommunikationsmittel 110 eine Netzwerkschnittstelle 114 und eine optionale Netzwerkschnittstelle 115.

Ein Beispiel für einen Prozessor ist ein Universalprozessor, ein Mikroprozessor, eine Mikrokontrolleinheit wie ein Mikrokontroller, ein digitaler Signalprozessor (DSP), eine anwendungsspezifische Integrierte Schaltung (ASIC), ein Field Programmable Gate Array (FPGA) und ein Prozessor mit einem anwendungsspezifischem Befehlssatz (ASIP). Vorzugsweise ist Prozessor 111 ein ARM-Prozessor.

Eine Netzwerkschnittstelle umfasst beispielsweise eine Netzwerkkarte, eine Antenne, ein Netzwerkmodul und/oder ein Modem und ist eingerichtet, um eine Verbindung mit einem Kommunikationsnetzwerk (z.B. dem ersten und/oder zweiten drahtlosen Kommunikationsnetzwerk) herzustellen.

Der Programmspeicher 112 enthält beispielsweise ein Betriebssystem und ein Kommunikationsprogramm mit jeweiligen Programmanweisungen, die beim Starten des Prozessors 111 zumindest teilweise in den Hauptspeicher 113 geladen und von dem Prozessor 111 ausgeführt werden. Ein Beispiel für ein Betriebssystem ist ein eingebettetes Betriebssystem wie embedded Linux oder Windows CE. Ein Betriebssystem verwaltet beispielsweise Betriebsmittel wie den Hauptspeicher 113, den Programmspeicher 112 und die Netzwerkschnittstellen 114 und 115. Zum Beispiel umfasst das Kommunikationsprogramm Programmanweisungen zum Steuern des Sendens und Empfangens von Daten über das erste und zweite drahtlose Kommunikationsnetzwerk.

Zum Beispiel steuert der Prozessor 111 die Netzwerkschnittstellen 114 und 115, wobei die Steuerung der Netzwerkschnittstellen 114 und 115 beispielsweise durch ein Gerätetreiberprogramm ermöglicht wird, das Teil des Betriebssystems ist. Die Netzwerkschnittstelle 114 kann beispielsweise Daten über ein erstes drahtloses Kommunikationsnetzwerk empfangen und an den Prozessor 111 weiterleiten und/oder Daten von dem Prozessor 111 empfangen und über das erste drahtlose Kommunikationsnetzwerk senden. Die optionale Netzwerkschnittstelle 115 kann beispielsweise Daten über ein zweites drahtloses Kommunikationsnetzwerk empfangen und an den Prozessor 111 weiterleiten und/oder Daten von dem Prozessor 111 empfangen und über das zweite drahtlose Kommunikationsnetzwerk senden.

Zum Beispiel sind die Kommunikationsmittel 110' zumindest teilweise als Schaltungsblock einer anwendungsspezifischen integrierten Schaltung ausgebildet. Zum Beispiel sind die Kommunikationsmittel 110' zumindest teilweise als Schaltungsblock einer anwendungsspezifischen integrierten Schaltung ausgebildet, die ferner einen Schaltungsblock der Sicherheitsmittel 120 und einen Schaltungsblock der Signalverarbeitungsmittel 130 umfasst. Zum Beispiel ist Prozessor 111 Teil eines solchen Schaltungsblocks.

Fig. 1c zeigt ein Blockdiagramm einer beispielhaften Ausführungsform der Signalverarbeitungsmittel 130' einer erfindungsgemäßen Vorrichtung. Die Kommunikationsmittel 130 der erfindungsgemäßen Vorrichtung 100 entsprechen beispielsweise den Signalverarbeitungsmitteln 130'.

Die Signalverarbeitungsmittel 130' umfassen einen Prozessor 131 mit einem Programmspeicher 132 und einem Hauptspeicher 133. Ferner umfassen die Signalverarbeitungsmittel 130' eine Datenschnittstelle 134 und eine Datenschnittstelle 135.

Ein Beispiel für einen Prozessor ist ein Universalprozessor, ein Mikroprozessor, eine Mikrokontrolleinheit wie ein Mikrokontroller, ein digitaler Signalprozessor (DSP), eine anwendungsspezifische Integrierte Schaltung (ASIC), ein Field Programmable Gate Array (FPGA) und ein Prozessor mit einem anwendungsspezifischem Befehlssatz (ASIP). Vorzugsweise ist Prozessor 131 ein ARM-Prozessor.

Ein Beispiel für eine Datenschnittstelle ist eine USB-Schnittstelle, eine IEEE 1394-Schnittstelle, eine CAN-Bus-Schnittstelle, eine Zigbee-Schnittstelle, eine Bluetooth-Schnittstelle, eine serielle Schnittstelle wie eine R232-Schnittstelle und/oder eine parallele Schnittstelle wie eine IEEE 1284-Schnittstelle. Zum Beispiel sind die Datenschnittstellen 134 und 135 drahtgebundene Datenschnittstellen.

Der Programmspeicher 132 enthält beispielsweise ein Betriebssystem und ein Steuer- und Signalverarbeitungsprogramm mit jeweiligen Programmanweisungen, die beim Starten des Prozessors 131 zumindest teilweise in den Hauptspeicher 133 geladen und von dem Prozessor 131 ausgeführt werden. Ein Beispiel für ein Betriebssystem ist ein eingebettetes Betriebssystem wie embedded Linux oder Windows CE. Ein Betriebssystem verwaltet beispielsweise Betriebsmittel wie den Hauptspeicher 132, den Programmspeicher 133 und die Datenschnittstellen 134 und 135. Zum Beispiel umfasst das Steuer- und Signalverarbeitungsprogramm Programmanweisungen zum Steuern des Leuchtmittels 140 und/oder zum Verarbeiten von Daten von dem Sensor 150.

Zum Beispiel steuert der Prozessor 131 die Datenschnittstellen 134 und 135, das Leuchtmittel 140, die Energieversorgungsmittel 141 und den Sensor 150, wobei die Steuerung beispielsweise zumindest teilweise jeweils durch das Steuer- und Signalverarbeitungsprogramm und/oder ein Gerätetreiberprogramm ermöglicht wird, das Teil des Betriebssystems ist.

Außerdem können die Signalverarbeitungsmittel 130' neben Prozessor 131 eine optionale FPGA-Schaltung 136 umfassen. Dies ist beispielsweise vorteilhaft, wenn Prozessor 131 ein ARM-Prozessor ist. Zum Beispiel können Prozessor 131 und FPGA-Schaltung 136 die Steuerung der Datenschnittstellen 134 und 135, des Leuchtmittels 140, der Energieversorgungsmittel 141 und des Sensors 150 gemeinsam oder verteilt übernehmen. Zum Beispiel kann Prozessor 131 Datenschnittstelle 134, das Leuchtmittel 140 und die Energieversorgungsmittel 141 steuern. Zum Beispiel kann FPGA-Schaltung Datenschnittstelle 135 und Sensor 150 steuern. FPGA-Schaltungen erlauben eine parallele Verarbeitung von Daten (z.B. im Gegensatz zu Mikrokontrollern, die Daten sequentiell verarbeiten) und sind deshalb gut für Echtzeitanwendungen wie die digitale Signalverarbeitung geeignet. Logikfunktionen können zu einer FPGA-Schaltung hinzugefügt oder von dieser entfernt werden. Die Lebenszeit von FPGA-gestützten Entwicklungen ist länger. Dies ist beispielsweise vorteilhaft, um eine Verarbeitung von Daten durch die Signalverarbeitungsmittel 110' auch für zeitkritische Anwendungen zu ermöglichen.

Zum Beispiel sind der Prozessor 131 und die FPGA-Schaltung 136 für eine parallele Datenverarbeitung optimiert. Dies ist beispielsweise vorteilhaft, um zum einen eine hohe Flexibilität und Erweiterbarkeit der Signalverarbeitungsmittel 110' und zum anderen eine Verarbeitung von Daten durch die Signalverarbeitungsmittel 110' auch für zeitkritischen Anwendungen zu ermöglich. Zum Beispiel können die FPGA-Schaltung 136 und der Prozessor 131 parallel verschiedene zeitkritische Daten verarbeiten. Zum Beispiel steuert die FPGA-Schaltung 136 das Leuchtmittel 140 und/oder die Energieversorgungsmittel 141 und der Prozessor verarbeitet die Sensordaten von Sensor 150 und Sensor 280. Es ist beispielsweise auch denkbar, dass die Signalverarbeitungsmittel 110' andere und oder weitere Prozessoren umfassen.

Die Datenschnittstelle 134 kann beispielsweise Daten von dem Leuchtmittel 140 bzw. den Energieversorgungsmitteln 141 empfangen und an den Prozessor 131 und/oder die FPGA-Schaltung 136 weiterleiten und/oder Daten von dem Prozessor 131 und/oder die FPGA-Schaltung 136 empfangen und an das Leuchtmittel 140 bzw. die Energieversorgungsmittel 141 weiterleiten. Die Datenschnittstelle 135 kann beispielsweise Daten von dem Sensor 150 und dem Sensor 280 empfangen und an den Prozessor 131 und/oder FPGA-Schaltung 136 weiterleiten und/oder Daten von dem Prozessor 131 und/oder FPGA-Schaltung 136 empfangen und an den Sensor 150 und den Sensor 280 weiterleiten.

Zum Beispiel sind die Signalverarbeitungsmittel 130' zumindest teilweise als Schaltungsblock einer anwendungsspezifischen integrierten Schaltung ausgebildet. Zum Beispiel sind die die Signalverarbeitungsmittel 130' zumindest teilweise als Schaltungsblock einer anwendungsspezifischen integrierten Schaltung ausgebildet, die ferner einen Schaltungsblock der Kommunikationsmittel 110 und einen Schaltungsblock der Sicherheitsmittel 120 umfasst. Zum Beispiel sind Prozessor 131 und FPGA-Schaltung 136 Teil eines solchen Schaltungsblocks.

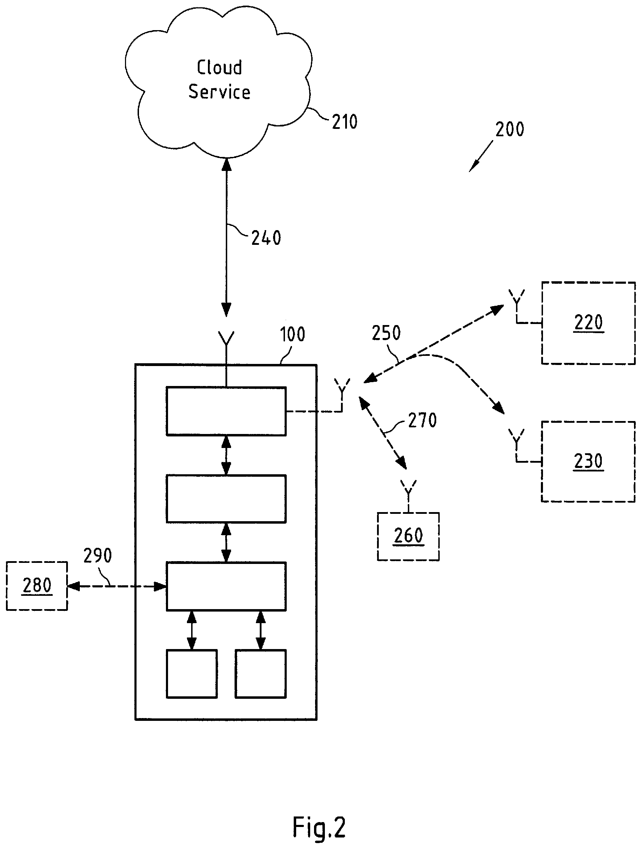

Fig. 2 zeigt ein Blockdiagramm einer beispielhaften Ausführungsform des erfindungsgemäßen Systems 200. Das System 200 umfasst zumindest eine erfindungsgemäße Vorrichtung 100 und einen Cloud Service 210.

Die Vorrichtung 100 ist über eine Verbindung 240 mit dem Cloud Service 210 verbunden. Die Verbindung 240 ist beispielswese zumindest teilweise eine Verbindung über ein erstes drahtloses Kommunikationsnetzwerk. Das erste drahtlose Kommunikationsnetzwerk ist zum Beispiel ein Mobilfunknetzwerk. Die Verbindung 240 ist zum Beispiel eine geschützte Verbindung wie eine verschlüsselte Verbindung und/oder eine VPN-Verbindung.

Cloud Service 210 umfasst beispielsweise eine oder mehrere zentrale Steuervorrichtungen eines Betreibers der Vorrichtungen 100, 220 und 230.

Zum Beispiel umfasst das System 200 optional eine erste Vorrichtung zum Steuern eines Leuchtmittels 220 und eine zweite Vorrichtung zum Steuern eines Leuchtmittels 230.

Die Vorrichtung 100 ist über die Verbindungen 250 mit den Vorrichtungen 220 und 230 verbunden. Die Verbindungen 250 sind beispielsweise Verbindungen über ein zweites drahtloses Kommunikationsnetzwerk. Das zweite drahtlose Kommunikationsnetzwerk ist zum Beispiel ein drahtloses lokales Netzwerk. Die Verbindungen 250 sind zum Beispiel geschützte Verbindungen wie verschlüsselte Verbindungen und/oder VPN-Verbindungen.

Vorrichtungen 220 und 230 sind beispielsweise jeweils weitere erfindungsgemäße Vorrichtungen 100. Zum Beispiel bilden Vorrichtung 100, Vorrichtung 220 und Vorrichtung 230 eine Gruppe von erfindungsgemäßen Vorrichtungen.

Zum Beispiel umfasst das System 200 optional einen ersten externen Sensor 260.

Die Vorrichtung 100 ist über Verbindung 270 mit dem externen Sensor 260 verbunden. Die Verbindung 270 ist beispielsweise eine Verbindung über das zweite drahtlose Kommunikationsnetzwerk. Die Verbindung 270 ist beispielsweise eine geschützte Verbindung wie eine verschlüsselte Verbindung und/oder eine VPN-Verbindung.

Der externe Sensor 260 ist außerhalb der Vorrichtung 100 angeordnet. Zum Beispiel ist der externe Sensor 260 ein mobiler Sensor, der sich in einem Fahrzeug befindet und nur temporär mit der Vorrichtung 100 verbunden ist. Es ist auch denkbar, dass das System 200 mehrere erste externe Sensoren 260 umfasst.

Zum Beispiel umfasst das System 200 optional einen zweiten externen Sensor 280.

Die Vorrichtung 100 ist über Verbindung 290 mit dem externen Sensor 280 verbunden. Die Verbindung 290 ist beispielsweise eine drahtgebundene Verbindung. Zum Beispiel umfassen die Signalverarbeitungsmittel 130 der Vorrichtung 100 eine entsprechende drahtgebundene Datenschnittstelle.

Der externe Sensor 280 ist außerhalb der Vorrichtung 100 angeordnet. Zum Beispiel ist der externe Sensor 280 ein Sensor, der nachträglich mit der Vorrichtung 100 verbunden wurde. Es ist auch denkbar, dass das System 200 mehrere zweite externe Sensoren 280 umfasst.

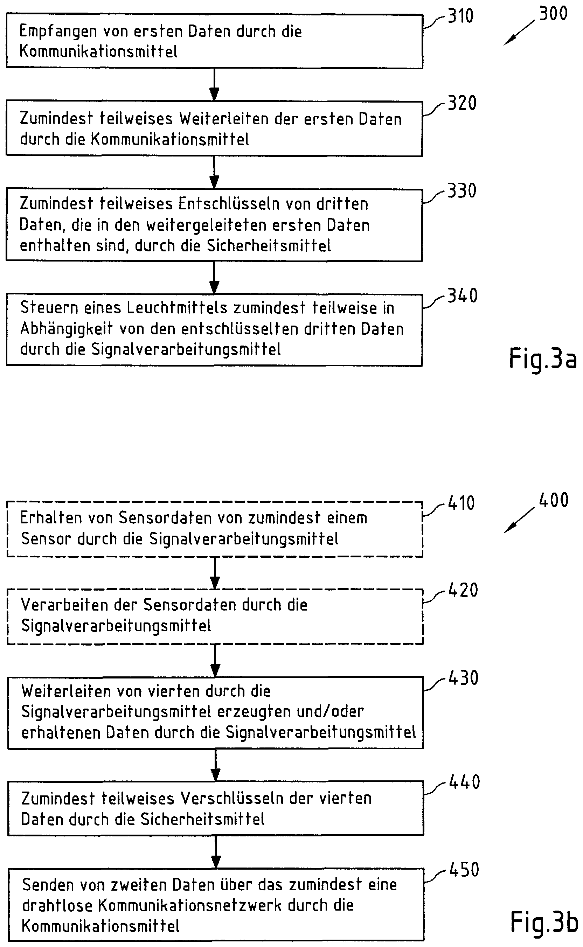

Fig. 3a zeigt ein Ablaufdiagramm 300 mit Schritten einer beispielhaften Ausführungsform des erfindungsgemäßen Verfahrens, die durch die Mittel der erfindungsgemäßen Vorrichtung 100 ausgeführt und/oder gesteuert werden.

In einem Schritt 310 werden die ersten Daten durch die Kommunikationsmittel 110 empfangen. Zum Beispiel werden die ersten Daten über Verbindung 240 von dem Cloud Service 210 empfangen.

Zum Beispiel enthalten die ersten Daten ein Updateprogramm für ein in dem Programmspeicher 112 der Kommunikationsmittel 110' gespeichertes Kommunikationsprogramm. Zum Beispiel umfasst das Updateprogramm Programmanweisungen, die den Prozessor 111 veranlassen, wenn sie von dem Prozessor 111 ausgeführt werden, ein in dem Programmspeicher 112 gespeichertes Kommunikationsprogramm anzupassen. Zum Beispiel führt der Prozessor 111, die Programmanweisungen eines Updateprogramms, das in den ersten Daten enthalten ist, automatisch nach dem Empfang der ersten Daten aus. Zum Beispiel kann das Updateprogramm ein Gerätetreiberprogramm für einen mit der Vorrichtung 100 verbundenen Sensor (z.B. Sensor 260) umfassen.

Zum Beispiel enthalten die ersten Daten Steueranweisungen und/oder Steuerparameter einer zentralen Steuervorrichtung des Cloud Services 210 für die Signalverarbeitungsmittel 130. Steueranweisungen sind zum Beispiel Anweisungen zum Anschalten, Ausschalten und Dimmen des Leuchtmittels 140. Steuerparameter sind zum Beispiel ein Anschaltzeitpunkt, ein Ausschaltzeitpunkt, ein Helligkeitsschwellwert zum Anschalten/Ausschalten, ein Versorgungsspannungswert und ein Versorgungsstromwert. Zum Beispiel sind die Steueranweisungen und/oder Steuerparameter in den ersten Daten verschlüsselt enthalten.

Zum Beispiel enthalten die ersten Daten ein Updateprogramm für ein in einem Programmspeicher 132 der Signalverarbeitungsmittel 130' gespeichertes Steuer- und Signalverarbeitungsprogramm. Zum Beispiel umfasst das Updateprogramm Programmanweisungen, die den Prozessor 131 veranlassen, wenn sie von dem Prozessor 131 ausgeführt werden, ein im Programmspeicher 132 gespeichertes Steuer- und Signalverarbeitungsprogramm anzupassen. Zum Beispiel kann das Updateprogramm einen neuen Signalverarbeitungsalgorithmus und/oder ein Gerätetreiberprogramm für einen mit der Vorrichtung 100 verbundenen Sensor (z.B. Sensor 280) umfassen. Zum Beispiel ist das Updateprogramm für ein im Programmspeicher 132 gespeichertes Steuer- und Signalverarbeitungsprogramm in den ersten Daten verschlüsselt enthalten.

In einem Schritt 320 werden die ersten Daten durch die Kommunikationsmittel 110 zumindest teilweise an die Signalverarbeitungsmittel 120 weitergeleitet. Zum Beispiel leiten die Kommunikationsmittel die in den ersten Daten enthaltenen Steueranweisungen, Steuerparameter und/oder ein darin enthaltenes Updateprogramm für ein in einem Speicher der Signalverarbeitungsmittel gespeichertes Steuer- und Signalverarbeitungsprogramm an die Signalverarbeitungsmittel 130 weiter. Zum Beispiel sind die Steueranweisungen, Steuerparameter und/oder das Updateprogramm für ein in einem Speicher der Signalverarbeitungsmittel gespeichertes Steuer- und Signalverarbeitungsprogramm an die Signalverarbeitungsmittel 130 in den ersten Daten als dritte Daten enthalten. Zum Beispiel leiten die Kommunikationsmittel 110 diese Daten an die Signalverarbeitungsmittel 130 weiter, indem sie diese Daten in Schritt 320 über die Verbindung 160 an die Sicherheitsmittel 120 senden.

In einem Schritt 330 werden dritte Daten, die in den weitergeleiteten ersten Daten enthalten sind, durch die Sicherheitsmittel 120 zumindest teilweise entschlüsselt. Zum Beispiel empfangen die Sicherheitsmittel 120 im Schritt 330 die von den Kommunikationsmitteln 110 im Schritt 320 über die Verbindung 160 gesendeten dritten Daten. Anschließend entschlüsseln die Sicherheitsmittel 120 beispielsweise die über die Verbindung 160 empfangenen dritten Daten zumindest teilweise. Zum Beispiel entschlüsseln die Sicherheitsmittel 120, die in den über die Verbindung 160 empfangenen dritten Daten verschlüsselt enthaltenen Daten (z.B. die darin verschlüsselt enthaltenen Steueranweisungen, Steuerparameter und/oder ein darin verschlüsselt enthaltenes Updateprogramm für ein in einem Speicher der Signalverarbeitungsmittel gespeichertes Steuer- und Signalverarbeitungsprogramm). Zum Beispiel entschlüsseln die Sicherheitsmittel 120 alle über die Verbindung 160 empfangenen dritten Daten. Anschließend senden die Sicherheitsmittel 120 die entschlüsselten dritten Daten über die Verbindung 170 an die Signalverarbeitungsmittel 130.

Ferner können die Sicherheitsmittel 120 im Schritt 330 beispielsweise die Integrität der über die Verbindung 160 empfangenen dritten Daten zumindest teilweise prüfen. Zum Beispiel senden die Sicherheitsmittel 120 die unverschlüsselten dritten Daten nur über die Verbindung 170 an die Signalverarbeitungsmittel 130, wenn die dritten Daten integer sind.

In einem Schritt 340 wird das Leuchtmittel 140 zumindest teilweise in Abhängigkeit von den entschlüsselten dritten Daten durch die Signalverarbeitungsmittel 130 gesteuert.

Zum Beispiel empfangen die Signalverarbeitungsmittel 130 im Schritt 340 die von den Sicherheitsmitteln 120 im Schritt 330 über die Verbindung 170 gesendeten entschlüsselten dritten Daten. Zum Beispiel enthalten die im Schritt 340 empfangenen entschlüsselten dritten Daten Steueranweisungen. Zum Beispiel steuern die Signalverarbeitungsmittel 130 das Leuchtmittel 140 entsprechend der in den entschlüsselten dritten Daten enthaltenen Steueranweisungen. Wenn die Steueranweisungen beispielsweise eine Anweisung zum Ausschalten des Leuchtmittels 140 enthalten, steuern (oder veranlassen) die Signalverarbeitungsmittel 130, dass das Leuchtmittel 140 ausgeschaltet wird (z.B. indem sie die Energieversorgungsmittel 141 steuern, keine Leistung mehr für das Betreiben des Leuchtmittels 140 bereitzustellen).

Zum Beispiel enthalten die im Schritt 340 empfangenen entschlüsselten dritten Daten Steuerparameter. Zum Beispiel passen die Signalverarbeitungsmittel 130 die Steuerung des Leuchtmittels 140 entsprechend der in den entschlüsselten dritten Daten enthaltenen Steuerparametern an. Wenn die Steuerparameter beispielsweise einen Ausschaltzeitpunkt für das Leuchtmittel 140 enthalten, steuern (oder veranlassen) die Signalverarbeitungsmittel 130, dass das Leuchtmittel 140 zu diesem Ausschaltzeitpunkt ausgeschaltet wird (z.B. indem sie die Energieversorgungsmittel 141 steuern, ab diesem Ausschaltzeitpunkt keine Leistung mehr für das Betreiben des Leuchtmittels 140 bereitzustellen). Wenn die Steuerparameter beispielsweise einen Stromkennwert für das Leuchtmittel 140 enthalten, steuern (oder veranlassen) die Signalverarbeitungsmittel 130, dass dem Leuchtmittel 140 ein entsprechender Strom zum Betreiben bereitgestellt wird (z.B. indem sie die Energieversorgungsmittel 141 steuern, einen entsprechenden Strom für das Betreiben des Leuchtmittels 140 bereitzustellen).

Zum Beispiel enthalten die im Schritt 340 empfangenen entschlüsselten dritten Daten ein Updateprogramm für ein im Programmspeicher 132 der Signalverarbeitungsmittel 130' gespeichertes Steuer- und Signalverarbeitungsprogramm. Zum Beispiel führt der Prozessor 131, die Programmanweisungen eines Updateprogramms, das in den im Schritt 340 empfangenen entschlüsselten dritten Daten enthalten ist, automatisch nach dem Empfang der Daten aus.

Zum Beispiel können die Signalverarbeitungsmittel 130 das Leuchtmittel 140 zumindest teilweise in Abhängigkeit von Sensordaten von Sensor 150 steuern. Wenn der Sensor 150 ein Umgebungstemperatursensor ist, können die Signalverarbeitungsmittel 130 das Leuchtmittel 140 zum Beispiel derart steuern, dass das Leuchtmittel 140 vor für das Leuchtmittel 140 schädlichen Temperaturen geschützt wird (z.B. indem sie die Energieversorgungsmittel 141 bei hohen Umgebungstemperaturen steuern, einen geringeren Strom für das Betreiben des Leuchtmittels 140 bereitzustellen, als bei niedrigeren Umgebungstemperaturen).

Fig. 3b zeigt ein Ablaufdiagramm 400 mit Schritten einer beispielhaften Ausführungsform des erfindungsgemäßen Verfahrens, die durch die Mittel der erfindungsgemäßen Vorrichtung 100 ausgeführt und/oder gesteuert werden. Die Schritte in Ablaufdiagramm 400 können beispielsweise zusätzlich (z.B. gleichzeitig) zu den Schritten in Ablaufdiagramm 300 durch die Mittel der erfindungsgemäßen Vorrichtung 100 ausgeführt und/oder gesteuert werden.

In einem optionalen Schritt 410 werden Sensordaten von zumindest einem Sensor durch die Signalverarbeitungsmittel 130 erhalten.

Zum Beispiel sind die Sensordaten Messdaten und/oder Signaldaten des zumindest einen Sensors. Zum Beispiel empfangen die Signalverarbeitungsmittel 130 im Schritt 410 Sensordaten von dem Sensor 150 über Verbindung 190 und Sensordaten von dem externen Sensor 280 über Verbindung 290.

In einem optionalen Schritt 420 werden die Sensordaten durch die Signalverarbeitungsmittel 130 verarbeitet.

Zum Beispiel werden im Schritt 420 die im Schritt 410 von dem Sensor 150 und dem externen Sensor 280 empfangenen Sensordaten verarbeitet. Zum Beispiel wenden die Signalverarbeitungsmittel 140 beim Verarbeiten im Schritt 420 zumindest einen Datenverarbeitungsalgorithmus wie einen Datenkomprimierungsalgorithmus, einen Datenaufbereitungsalgorithmus und/oder Datenauswertungsalgorithmus auf die Sensordaten und/oder einen Teil der Sensordaten an. Wenn der externe Sensor 280 ein Videosensor ist, wenden die Signalverarbeitungsmittel 130 auf die von dem externen Sensor 280 empfangenen Echtzeitvideodaten zum Beispiel einen Videokompressionsalgorithmus bzw. Videocodec (z.B. MPEG-1, MPEG-2, MPEG-4) und/oder einen Algorithmus zur Objekterkennung in Videodaten an.

Zum Beispiel können die Signalverarbeitungsmittel 130 das Leuchtmittel 140 zumindest teilweise in Abhängigkeit eines Ergebnisses eines auf die Sensordaten und/oder einen Teil der Sensordaten angewendeten Datenauswertungsalgorithmus steuern. Zum Beispiel kann ein Algorithmus zur Objekterkennung in Videodaten, einen gefährliche Situation erkennen (z.B. ein auf die Straße laufendes Kind). Wenn eine solche gefährliche Situation erkannt wird, können die Signalverarbeitungsmittel 130 beispielsweise das abwechselnde An- und Ausschalten oder das Hochdimmen des Leuchtmittels 140 steuern (oder veranlassen).

Zum Beispiel können die Signalverarbeitungsmittel 130 das Leuchtmittel 140 zumindest teilweise in Abhängigkeit der Sensordaten steuern. Wenn der Sensor 150 ein Umgebungstemperatursensor ist, können die Signalverarbeitungsmittel 130 das Leuchtmittel 140 in Abhängigkeit der von dem Sensor 150 empfangenen Temperaturdaten, wie oben beschrieben, zum Beispiel derart steuern, dass das Leuchtmittel 140 vor für das Leuchtmittel 140 schädlichen Temperaturen geschützt wird (z.B. indem sie die Energieversorgungsmittel 141 bei hohen Umgebungstemperarturen steuern, einen geringeren Strom für das Betreiben des Leuchtmittels 140 bereitzustellen, als bei niedrigeren Umgebungstemperaturen).

In einem Schritt 430 werden vierte durch die Signalverarbeitungsmittel erzeugte und/oder erhaltene Daten durch die Signalverarbeitungsmittel 130 an weitergeleitet. Die Signalverarbeitungsmittel 130 leiten die vierten Daten beispielsweise an die Kommunikationsmittel 110 weiter, indem sie die vierten Daten in Schritt 430 über die Verbindung 170 an die Sicherheitsmittel 120 senden.

Zum Beispiel enthalten die dritten Daten von den Signalverarbeitungsmitteln 130 protokollierte Steuerinformationen für den Cloud Service 210. Zum Beispiel protokollieren die Signalverarbeitungsmittel alle Steuerereignisse (z.B. Anschalten, Ausschalten, Energieverbrauch) und/oder alle Fehler (z.B. Stromausfall, Ausfall des Leuchtmittels) als Steuerinformationen.

Zum Beispiel beruhen die vierten Daten zumindest teilweise auf Sensordaten. Beispielsweise enthalten die vierten Daten die im Schritt 410 empfangenen Sensordaten und/oder einen Teil der im Schritt 410 empfangenen Sensordaten. Zum Beispiel enthalten die vierten Daten die im Schritt 420 verarbeiteten Sensordaten oder einen Teil der in Schritt 420 verarbeiteten Sensordaten oder ein Ergebnis der Datenverarbeitung in Schritt 420.

In einem Schritt 440 werden die vierten Daten durch die Sicherheitsmittel 120 zumindest teilweise verschlüsselt.

Zum Beispiel empfangen die Sicherheitsmittel 120 im Schritt 440 die von den Signalverarbeitungsmitteln 130 im Schritt 430 über die Verbindung 170 gesendeten vierten Daten. Anschließend verschlüsseln die Sicherheitsmittel 120 die über die Verbindung 170 empfangenen vierten Daten zumindest teilweise. Zum Beispiel verschlüsseln die Sicherheitsmittel 120 alle über die Verbindung 170 empfangenen vierten Daten. Anschließend senden die Sicherheitsmittel 120 die verschlüsselten vierten Daten beispielsweise über die Verbindung 160 an die Kommunikationsmittel 110.

In einem Schritt 450 werden die zweiten Daten über das zumindest eine drahtlose Kommunikationsnetzwerk durch die Kommunikationsmittel 110 gesendet. Zum Beispiel werden die zweiten Daten über Verbindung 240 an den Cloud Service 210 gesendet.

Zum Beispiel empfangen die Kommunikationsmittel 110 im Schritt 450 die von den Sicherheitsmitteln 120 im Schritt 440 über die Verbindung 160 gesendeten verschlüsselten vierten Daten. Zum Beispiel enthalten die zweiten Daten die verschlüsselten vierten Daten oder einen Teil der verschlüsselten vierten Daten.

Zum Beispiel steuern die Kommunikationsmittel 110 das Senden der zweiten Daten in Schritt 450 zumindest teilweise. Zum Beispiel steuern die Kommunikationsmittel das Senden der zweiten Daten zumindest teilweise derart, dass der Energieaufwand beim Senden minimiert wird (z.B. der Energieaufwand pro Nutzbit). Zum Beispiel steuern die Kommunikationsmittel 110 das Senden der zweiten Daten zumindest teilweise in Abhängigkeit von der verfügbaren Bandbreite und/oder der Kanalqualität in dem ersten drahtlosen Kommunikationsnetz.

Zum Beispiel steuern die Kommunikationsmittel 110 den Sendezeitpunkt, die Aggregation und/oder die Komprimierungsrate der zweiten Daten zumindest teilweise. Zum Beispiel umfassen die zweiten Daten Daten mit geringer Priorität (z.B. Steuerinformationen) und Daten mit hoher Priorität (z.B. Echtzeitvideodaten). Zum Beispiel steuern die Kommunikationsmittel 110 das Senden zweiter Daten derart, dass zweite Daten mit hoher Priorität sofort gesendet werden und/oder zweite Daten mit geringer Priorität zu einem Zeitpunkt gesendet werden, zu dem das erste drahtlose Kommunikationsnetzwerk nur wenig genutzt wird (z.B. nachts). Zum Beispiel steuern die Kommunikationsmittel 110 die Komprimierungsrate eines von den Signalverarbeitungsmitteln 130 im Schritt 420 auf die Sensordaten angewendeten Datenkomprimierungsalgorithmus. Zum Beispiel aggregieren die Kommunikationsmittel 110 die zweite Daten (z.B. zweite Daten mit geringer Priorität) vor dem Senden.

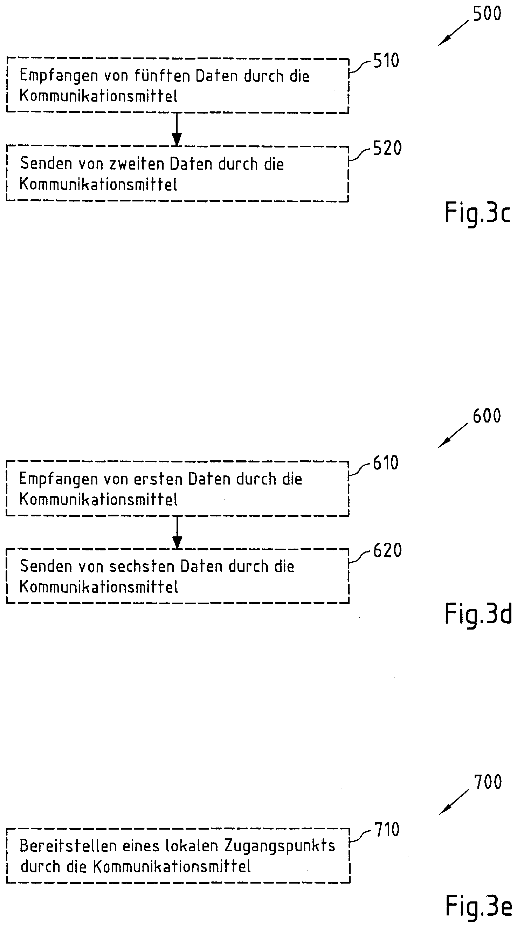

Fig. 3c zeigt ein Ablaufdiagramm 500 mit optionalen Schritten einer beispielhaften Ausführungsform des erfindungsgemäßen Verfahrens, die durch die Mittel der erfindungsgemäßen Vorrichtung 100 ausgeführt und/oder gesteuert werden können. Die Schritte in Ablaufdiagramm 500 können beispielsweise zusätzlich (z.B. gleichzeitig) zu den Schritten in den Ablaufdiagrammen 300 und 400 durch die Mittel der erfindungsgemäßen Vorrichtung 100 ausgeführt und/oder gesteuert werden.

In einem optionalen Schritt 510 werden fünfte Daten durch die Kommunikationsmittel 110 empfangen. Zum Beispiel werden die fünften Daten zumindest teilweise über die Verbindungen 250 von der Vorrichtung 220 und/oder der Vorrichtung 230 empfangen. Zum Beispiel enthalten die fünften Daten Daten der Vorrichtung 220 und/oder der Vorrichtung 230 für den Cloud Service 210.

Zum Beispiel werden die fünften Daten zumindest teilweise über die Verbindung 270 von dem externen Sensor 260 empfangen. Zum Beispiel enthalten die fünften Daten Signal- und/oder Messdaten des externen Sensors 260 für den Cloud Service 210.

In einem optionalen Schritt 520 werden zweite Daten durch die Kommunikationsmittel 110 gesendet. Der Schritt 520 ergänzt beispielsweise den Schritt 450 oder ist ein optionaler Teil des Schritts 450. Zum Beispiel werden die zweiten Daten über Verbindung 240 an den Cloud Service 210 gesendet. Zum Beispiel enthalten die zweiten Daten die fünften Daten oder einen Teil der fünften Daten.

Wie oben für Schritt 450 beschrieben, können die Kommunikationsmittel 110 das Senden der zweiten Daten auch in Schritt 510 zumindest teilweise steuern.

Fig. 3d zeigt ein Ablaufdiagramm 600 mit optionalen Schritten einer beispielhaften Ausführungsform des erfindungsgemäßen Verfahrens, die durch die Mittel der erfindungsgemäßen Vorrichtung 100 ausgeführt und/oder gesteuert werden können. Die Schritte in Ablaufdiagramm 600 können beispielsweise zusätzlich (z.B. gleichzeitig) zu den Schritten in den Ablaufdiagrammen 300, 400 und 500 durch die Mittel der erfindungsgemäßen Vorrichtung 100 ausgeführt und/oder gesteuert werden.

In einem optionalen Schritt 610 werden ersten Daten durch die Kommunikationsmittel 110 empfangen. Der Schritt 610 ergänzt beispielsweise den Schritt 310 oder ist ein optionaler Teil des Schritts 310. Zum Beispiel werden die ersten Daten über Verbindung 240 von Cloud Service 210 empfangen. Zum Beispiel enthalten die ersten Daten Daten, die für die Vorrichtung 220 und/oder die Vorrichtung 230 bestimmt sind (z.B. ein Updateprogramm, Steuerparameter und/oder Steueranweisungen).

In einem optionalen Schritt 620 werden sechste Daten durch die Kommunikationsmittel 110 gesendet. Zum Beispiel werden die sechsten Daten über die Verbindungen 250 an die Vorrichtung 220 und/oder 230 gesendet. Zum Beispiel enthalten die sechsten Daten die für die Vorrichtung 220 und/oder die Vorrichtung 230 bestimmten Daten der in Schritt 610 empfangenen ersten Daten.

Fig. 3e zeigt ein Ablaufdiagramm 700 mit optionalen Schritten einer beispielhaften Ausführungsform des erfindungsgemäßen Verfahrens, die durch die Mittel der erfindungsgemäßen Vorrichtung 100 ausgeführt und/oder gesteuert werden können. Die Schritte in Ablaufdiagramm 700 können beispielsweise zusätzlich (z.B. gleichzeitig) zu den Schritten in den Ablaufdiagrammen 300, 400, 500 und 600 durch die Mittel der erfindungsgemäßen Vorrichtung 100 ausgeführt und/oder gesteuert werden.

In einem optionalen Schritt 710 wird ein lokaler Zugangspunkt, insbesondere ein Webserver, durch die Kommunikationsmittel 110 bereitgestellt. Zum Beispiel stellen die Kommunikationsmittel den lokalen Zugangspunkt über das zweite drahtlose Kommunikationsnetzwerk bereit.

Zum Beispiel können mobile Kommunikationsendgeräte (z.B. Mobiltelefone und/oder Smartphones) über das zweite drahtlose Kommunikationsnetzwerk auf den lokalen Zugangspunkt zugreifen. Zum Beispiel können spezielle Anwendungsprogramme für mobile Kommunikationsendgeräte (z.B. APPs) und/oder ein Browserprogramm einen solchen Zugriff ermöglichen. Zum Beispiel können Informationen (z.B. Tourismusinformationen, Verkehrsinformationen, Nachrichteninformationen) über den lokalen Zugangspunkt zum Herunterladen für mobile Kommunikationsendgeräte über das zweite drahtlose Kommunikationsnetzwerk bereitgestellt werden. Zum Beispiel können die Informationen als Teil der ersten Daten über das erste drahtlose Kommunikationsnetzwerk empfangen werden. Zum Beispiel können die Informationen nur als Teil der ersten Daten über das erste drahtlose Kommunikationsnetzwerk gesendet und empfangen werden, wenn die Auslastung des ersten drahtlosen Kommunikationsnetzwerks gering ist (z.B. zu einer verkehrsgünstigen Zeit). Zum Beispiel stellt der lokale Zugangspunkt eine Programmierschnittstelle (API) zur Verfügung, über die auch Gerätetreiberprogramme von Drittanbietern und/oder Anwendungen von Drittanbietern eingebunden werden können.

Durch die erfindungsgemäße Vorrichtung wird beispielsweise ein Steuerungselement bzw. ein Gateway für das Management von gleichstrombasierten LED-Leuchtmitteln, mobilen Kommunikationsendgeräten (z.B. Smartphones) bzw. APPs und Sensoren (z.B. Videosensoren wie Kameras und Schallsensoren) bereitgestellt, das eine ganzheitliche Lösung für Beleuchtung, Logistik, Sicherheit, Verkehrsmanagement, Marketing und andere Bereiche ermöglicht. Die erfindungsgemäße Vorrichtung kann als Master-Steuerung bzw. Master-Gateway per Mobilfunk (z.B. über das erste drahtlose Kommunikationsnetzwerk) an eine zentrale Cloud Lösung (z.B. den Cloud Service 210) angebunden werden und kann andere Slave-Steuerungen (z.B. Vorrichtungen 220 und 230) beispielsweise über WLAN (z.B. über das zweite drahtlose Kommunikationsnetzwerk) erreichen. Die Mobilfunk-Verbindung nutzt beispielsweise Maschinenzu-Maschinen Netze, um eine Vielzahl von Mobilfunk-Verbindungen zu jeweiligen Master-Steuerungen bzw. Master-Gateways zu bündeln. Mehrere Slave-Steuerungen sind über jeweils eine der Master-Steuerungen bzw. eines der Master-Gateways mit der Cloud verbunden, indem eine WLAN basierte VPN-Verbindung aufgebaut wird. Zum Beispiel umfasst das drahtlose Kommunikationsnetzwerk eine kleine Gruppe von mindestens einem Master (verbunden mit einem zentralen Server direkt über VPN oder erst durch eine Funk Verbindung mit Telco Netzen , wie zB M2M Netze, und dann durch ein VPN Career Line an den Server verbunden) und 0-N Slaves (Verbunden durch eine schnurlose VPN Verbindung mit einem Slave und von dort aus an den Server). Die einzelnen Master-Steuerungen bzw. Master-Gateways können außerdem einen Webserver und einen Zugangspunkt für mobile Kommunikationsendgeräte und/oder externe APPs bereitstellen. Zusätzlich bieten sie beispielsweise WLAN und USB-Schnittstellen für externe Sensoren und Geräte an. Dadurch wird eine robuste energieeffiziente Kommunikation und Datenverarbeitung zwischen LEDs, Sensoren und Geräte über vier Intelligenz Ebenen bereitgestellt.
1) Cloud Server - Master Steuerung
2) Master Steuerung - Slave Steuerung
3) Steuerung - Externen Sensoren und Geräte
4) Master Steuerung - Master Steuerung

Die erfindungsgemäße Vorrichtung ermöglicht somit unter anderem eine sichere (Hardware und Software Encryption), robuste und energieeffiziente Handhabung von Daten aus diversen Daten-Erfassungen (z.B. Sensoren 150, 260, 280).

Die erfindungsgemäße Vorrichtung beinhaltet beispielsweise die komplette Elektronik und Intelligenz für die Steuerung von Gleichstrom betriebenen Komponenten von 1 W bis 1000W und mehr. Damit können beispielsweise digitale Geräte und LED Komponenten angeschlossen werden. Es können Datentypen (z.B. kleine und hohe Datenraten, ständige oder sporadische Datenkommunikation, bidirektionale oder uni-direktionale Datenverkehr) erfasst und verarbeitet werden.

Die erfindungsgemäße Vorrichtung kann sich zum Beispiel an jede Komponente von Dritt-Anbietern anpassen, indem eine passende Intelligenz (z.B. ein entsprechendes Gerätetreiberprogramm) aus dem Netz (z.B. von dem Cloud Service 210 über die Verbindung 240) heruntergeladen werden kann. Die Logikfunktionen der erfindungsgemäßen Vorrichtung (z.B. der Kommunikationsmittel und/oder der Signalverarbeitungsmittel) können beispielsweise jederzeit aktualisiert werden.

Die erfindungsgemäße Vorrichtung ermöglicht zum Beispiel die bi-direktionale Übertragung der Daten einzelner mit der erfindungsgemäßen Vorrichtung verbundener Sensoren (z.B. externer Sensor 260 oder externer Sensor 280) oder Geräte. Die erfindungsgemäße Vorrichtung ermöglicht beispielsweise eine sichere Übertragung (z.B. durch eine Ende-zu-Ende Verschlüsselung) und kann die Daten der mit der erfindungsgemäßen Vorrichtung verbundenen Sensoren zum Beispiel an eine Cloud (z.B. den Cloud Service 210) weiterleiten und über die Cloud Drittanbietern zur Verfügung stellen. Die erfindungsgemäße Vorrichtung kann beispielsweise eine Bibliothek von Signalverarbeitungsalgorithmen bereitstellen, um die Daten von den mit erfindungsgemäßen Vorrichtung verbundenen Sensoren (z.B. Sensor 150 und externer Sensor 280) nach der Erfassung am Ort der Entstehung zu verarbeiten. Durch den Einsatz von mehreren Prozessoren (z.B. Prozessor 111 und 131) und FPGA-Schaltungen (z.B. FPGA-Schaltung 136) bzw. von Prozessoren mit einem anwendungsspezifischem Befehlssatz oder anwendungsspezifischen integrierten Schaltungen in der erfindungsgemäßen Vorrichtung wird zum Beispiel eine parallele Datenverarbeitung ermöglicht, so dass eine Steuerung eines mit der erfindungsgemäßen Vorrichtung verbundenen Leuchtmittels (z.B. Leuchtmittel 140) gleichzeitig mit der Verarbeitung von Daten von den mit erfindungsgemäßen Vorrichtung verbundenen Sensoren (z.B. Sensor 150 und externer Sensor 280) stattfinden kann.

Die erfindungsgemäße Vorrichtung stellt beispielsweise eine Steuerung für eine Vielzahl von LED-Leuchtmitteln bereit. Dies bedeutet zum Beispiel, dass die Elektronik (z.B. die Energieversorgungsmittel 141) auf unterschiedliche Spannungs- und Stromanforderungen reagieren können muss. Zudem gibt es viele verschiedene Dimmverfahren, wie Anpassung des Stroms, Pulsweitenmodulation und Bit angle Modulation. Auch haben LED-Leuchtmittel unterschiedliche Verschaltungen. Dies führt zu unterschiedlichen Anforderungen im Betrieb aber auch zu massiven Unterschieden beim Starten der LED-Leuchtmittel. Hier können massive Zug-Lasten entstehen, die die Elektronik beschädigen können, und außerdem zum Flackern der LED-Leuchtmittel führen können. Durch die Anbindung der Prozessoren einerseits mit den Energieversorgungsmitteln und anderseits mit der Cloud (z.B. dem Cloud Service 210), kann beispielsweise die passende Logik (z.B. geeignete Steuerparameter) für verschiedene LED-Leuchtmittel heruntergeladen werden. Dies ist beispielsweise vorteilhaft, um eine optimale Nutzung der LED, OLED und anderer Gleichstrom basierter Leuchtmittel zu ermöglichen, indem sie ohne Elektronik mit DC Eingang eingesetzt werden. Eine Erweiterung mit allen Wechselstrom basierten Leuchtmitteln ist durch zusätzliche Komponenten wie beispielsweise DALI möglich.

Die erfindungsgemäße Vorrichtung stellt zum Beispiel eine Intelligenz für die Steuerung, Kommunikation, Verarbeitung und Zwischenspeicherung von Daten in Echtzeit bereit. Dabei können durch die Kombination von Hardware und Software basierten Algorithmen die Signalverarbeitung und allgemeine Prozesse in Echtzeit ausgeführt werden. Ein großer Speicherplatz (z.B. in Programmspeicher 112 und/oder in Programmspeicher 132) erlaubt zum Beispiel die Zwischenspeicherung von Daten. Die erfindungsgemäße Vorrichtung können vom Werk zum Beispiel nur mit einer Inventarnummer verschickt. Zum Beispiel wird die gesamte Logik zu dem jeweiligen Standort und zu den angeschlossenen Komponenten erst zu einem späteren Zeitpunkt, beispielsweise nach der Installation, geladen und gestartet. Die Logik für die einzelnen Komponenten kann jederzeit aktualisiert werden.

Die erfindungsgemäße Vorrichtung kann beispielsweise eine Middleware Plattform haben. Externe Hersteller können für die offene API dieser Middleware Plattform zum Beispiel eigene Applikationen entwickeln.

Die erfindungsgemäße Vorrichtung kann zum Beispiel Zustandsänderungen nach Bedarf protokollieren und ist stand-alone voll funktionsfähig. Dazu gehört beispielsweise auch eine interne Tabelle (z.B. eine Steuertabelle) für alle geplanten Dimm-Zeiten der LED Komponenten.

Die erfindungsgemäße Vorrichtung stellt beispielsweise einen Webserver für externe APPs für Smartphones, die mit entsprechenden Anwendungen auf dem Webserver kommunizieren können. Außerdem kann die erfindungsgemäße Vorrichtung beispielsweise Schnittstellen (z.B. USB, Bus Systeme und/oder WiFi) umfassen, um mit externen stationären und mobilen Sensoren und Geräte kommunizieren zu können.

Die Abfolge der einzelnen Verfahrensschritte in den einzelnen Ablaufdiagrammen ist nicht zwingend, soweit nicht anders angegeben sind alternative Abfolgen der Verfahrensschritte denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

Die in dieser Spezifikation beschriebenen beispielhaften Ausführungsformen der vorliegenden Erfindung sollen auch in allen Kombinationen miteinander offenbart sein. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Unter die Formulierung "und/oder" fallen sowohl der Fall "und" als auch der Fall "oder". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Vorrichtung zum Steuern eines Leuchtmittels, die Vorrichtung umfassend ein oder mehrere Kommunikationsmittel (110,110'), ein oder mehrere Sicherheitsmittel (120) und ein oder mehrere Signalverarbeitungsmittel (130, 130'),
wobei die Kommunikationsmittel (110, 110') eingerichtet sind, erste Daten über zumindest ein drahtloses Kommunikationsnetzwerk zu empfangen und zweite Daten über das zumindest eine drahtlose Kommunikationsnetzwerk zu senden, wobei die Kommunikationsmittel (110, 110') ferner eingerichtet sind, die ersten Daten an die Sicherheitsmittel (120) oder die Signalverarbeitungsmittel (130, 130') weiterzuleiten, wobei die ersten Daten dritte Daten umfassen, und wobei die dritten Daten zumindest teilweise mit einem symmetrischen, hybriden oder asymmetrischen Verschlüsselungsverfahren verschlüsselt sind,
wobei die Sicherheitsmittel (120) eingerichtet sind, die dritten Daten zu entschlüsseln und vierte Daten zu verschlüsseln, wobei die zweiten Daten auf den verschlüsselten vierten Daten beruhen, und
wobei die Signalverarbeitungsmittel (130, 130') eingerichtet sind, ein mit der Vorrichtung verbundenes Leuchtmittel (140) zumindest teilweise in Abhängigkeit von den entschlüsselten dritten Daten zu steuern, wobei die Signalverarbeitungsmittel (130, 130') ferner eingerichtet sind, die vierten Daten zu erzeugen und/oder zu erhalten und die erhaltenen und/oder erzeugten vierten Daten an die Sicherheitsmittel (120) oder die Kommunikationsmittel (110, 110') weiterzuleiten,
**dadurch gekennzeichnet, dass**
die Kommunikationsmittel (110, 110'), die Signalverarbeitungsmittel (130, 130') und die Sicherheitsmittel (120) jeweils zumindest ein unterschiedliches Hardwaremodul umfassen und dass ein Schlüssel zum Entschlüsseln der dritten Daten und/oder ein Schlüssel zum Verschlüsseln der vierten Daten derart in den Sicherheitsmitteln (120) einprogrammiert, gespeichert und/oder festverdrahtet ist/sind, dass er/sie nicht durch die Kommunikationsmittel (110, 110') auslesbar ist/sind.

2. Vorrichtung gemäß Anspruch 1, wobei die Kommunikationsmittel und die Signalverarbeitungsmittel miteinander verbunden sind, wobei die Kommunikationsmittel die ersten Daten über die Verbindung zwischen den Kommunikationsmitteln und den Signalverarbeitungsmitteln weiterleiten, wobei die Signalverarbeitungsmittel die vierten Daten über die Verbindung zwischen den Kommunikationsmitteln und den Signalverarbeitungsmitteln weiterleiten, und wobei die Sicherheitsmittel in der Verbindung zwischen den Kommunikationsmitteln und den Signalverarbeitungsmitteln angeordnet sind.

3. Vorrichtung gemäß einem der Ansprüche 1 und 2, wobei die Signalverarbeitungsmittel (130, 130') und/oder die Sicherheitsmittel (120) ferner eingerichtet sind, die Kommunikationsmittel (110, 110') zurückzusetzen, wobei die Kommunikationsmittel (110, 110') eingerichtet sind, regelmäßig eine Zustandsmeldung an die Signalverarbeitungsmittel und/oder die Sicherheitsmittel zu senden und/oder regelmäßig erste Daten an die Signalverarbeitungsmittel weiterzuleiten, und wobei die Signalverarbeitungsmittel (130, 130') und/oder die Sicherheitsmittel (120) ein Zurücksetzen der Kommunikationsmittel veranlassen, wenn eine solche regelmäßige Sendung und/oder Weiterleitung ausbleibt.

4. Vorrichtung gemäß einem der Ansprüche 1 bis 3, wobei die Sicherheitsmittel (120) ferner eingerichtet sind, die Integrität der dritten Daten zumindest teilweise zu überprüfen.

5. Vorrichtung gemäß einem der Ansprüche 1 bis 4, wobei die Signalverarbeitungsmittel (130, 130') eingerichtet sind, Sensordaten von zumindest einem mit der Vorrichtung verbundenen Sensor (150, 280) zu erhalten, und wobei die Signalverarbeitungsmittel (130, 130') ferner eingerichtet sind, das mit der Vorrichtung verbundene Leuchtmittel (140) zumindest teilweise in Abhängigkeit der Sensordaten zu steuern.

6. Vorrichtung gemäß Anspruch 5, wobei die Signalverarbeitungsmittel (130, 130') ferner eingerichtet sind, die Sensordaten zumindest teilweise derart zu verarbeiten, dass die Sensordaten zumindest teilweise komprimiert, aufbereitet und/oder ausgewertet werden, und wobei die vierten Daten zumindest teilweise die verarbeiteten Sensordaten umfassen.

7. Vorrichtung gemäß einem der Ansprüche 1 bis 6, wobei die Kommunikationsmittel (110, 110') ferner eingerichtet sind, die ersten Daten über ein erstes drahtloses Kommunikationsnetzwerk zu empfangen und die zweiten Daten über das erste drahtlose Kommunikationsnetzwerk zu senden, und wobei die Kommunikationsmittel ferner eingerichtet sind, fünfte Daten über ein zweites drahtloses Kommunikationsnetzwerk zu empfangen und sechste Daten über das zweite drahtlose Kommunikationsnetzwerk zu senden.

8. Vorrichtung gemäß Anspruch 7, wobei die zweiten Daten zumindest teilweise auf den fünften Daten beruhen, und wobei die sechsten Daten zumindest teilweise auf den ersten Daten beruhen.

9. Vorrichtung gemäß einem der Ansprüche 1 bis 8, wobei die unterschiedlichen Hardwaremodule jeweils eine elektronische Schaltung, ein Prozessor und/oder eine programmierbare logische Schaltung sind.

10. Vorrichtung gemäß Anspruch 9, wobei die Kommunikationsmittel (110, 110') einen ersten Prozessor (111) umfassen, und wobei die Signalverarbeitungsmittel (130,130') einen zweiten Prozessor (131) und/oder eine FPGA-Schaltung (136) umfassen, und wobei die Sicherheitsmittel (120) einen Verschlüsselungsprozessor und/oder ein Hardware-Sicherheitsmodul umfassen.

11. Vorrichtung gemäß Anspruch 10, wobei die ersten Daten ein oder mehrere Computerprogramme mit Programmanweisungen für die Kommunikationsmittel (110,110'), die Signalverarbeitungsmittel (130, 130') und/oder die Sicherheitsmittel (120) umfassen.

12. Vorrichtung gemäß einem der Ansprüche 1 bis 11, wobei die Vorrichtung ferner umfasst:
- ein oder mehrere Energieversorgungsmittel (141), die eingerichtet sind, die Kommunikationsmittel (110,110'), die Signalverarbeitungsmittel (130, 130') und die Sicherheitsmittel (120) und das mit der Vorrichtung verbundene Leuchtmittel (140) mit Energie zu versorgen, wobei die Signalverarbeitungsmittel (130, 130') eingerichtet sind, die Energieversorgung des Leuchtmittels (140) durch die Energieversorgungsmittel (141) zumindest teilweise zu steuern, und wobei die Energieversorgungsmittel umfassen:
- ein Netzteil, das eingerichtet ist, die Vorrichtung mit Energie zu versorgen, wobei die Ausgangsspannung des Netzteils eine Gleichspannung im Kleinspannungsbereich zwischen 0 und 120 Volt ist, und
- eine Treiberschaltung, die eingerichtet ist, eine Leistung zum Betreiben des mit der Vorrichtung verbundenen Leuchtmittels bereitzustellen, wobei die Eingangsspannung der Treiberschaltung die Ausgangsspannung des Netzteils ist, und wobei die Treiberschaltung von den Signalverarbeitungsmitteln steuerbar ist.

13. Verfahren zum Steuern eines Leuchtmittels, wobei das Verfahren durch eine Vorrichtung umfassend ein oder mehrere Kommunikationsmittel (110, 110'), ein oder mehrere Sicherheitsmittel (120) und ein oder mehrere Signalverarbeitungsmittel (130, 130') ausgeführt wird, und wobei das Verfahren umfasst:
- Empfangen (310, 610) von ersten Daten über zumindest ein drahtloses Kommunikationsnetzwerk durch die Kommunikationsmittel (110, 110'),
- Senden (450, 520) von zweiten Daten über das zumindest eine drahtlose Kommunikationsnetzwerk durch die Kommunikationsmittel (110,110'),
- Weiterleiten (320) der ersten Daten an die Sicherheitsmittel (120) oder die Signalverarbeitungsmittel (130, 130'), wobei die ersten Daten dritte Daten umfassen, und wobei die dritten Daten zumindest teilweise mit einem symmetrischen, hybriden oder asymmetrischen Verschlüsselungsverfahren verschlüsselt sind,
- Entschlüsseln (330) der dritten Daten durch die Sicherheitsmittel (120),
- Steuern eines Leuchtmittels (340) zumindest teilweise in Abhängigkeit von den entschlüsselten dritten Daten durch die Signalverarbeitungsmittel (130, 130'),
- Erzeugen und/oder Erhalten von vierten Daten durch die Signalverarbeitungsmittel (130,130')
- Weiterleiten (430) der erzeugten und/oder erhaltenen vierten Daten durch die Signalverarbeitungsmittel (130, 130') an die Sicherheitsmittel (120) oder die Kommunikationsmittel (110,110'), und
- Verschlüsseln (440) der vierten Daten durch die Sicherheitsmittel (120), wobei die zweiten Daten auf den verschlüsselten vierten Daten beruhen,
**dadurch gekennzeichnet, dass**
die Kommunikationsmittel (110, 110'), die Signalverarbeitungsmittel (130, 130') und die Sicherheitsmittel (120) jeweils zumindest ein unterschiedliches Hardwaremodul umfassen und dass ein Schlüssel zum Entschlüsseln der dritten Daten und/oder ein Schlüssel zum Verschlüsseln der vierten Daten derart in den Sicherheitsmitteln (120) einprogrammiert, gespeichert und/oder festverdrahtet ist/sind, dass er/sie nicht durch die Kommunikationsmittel (110, 110') auslesbar ist/sind.

14. System, umfassend:
- zumindest eine zentrale Steuervorrichtung (210), wobei die zentrale Steuerungsvorrichtung eingerichtet ist, eine oder mehrere Vorrichtungen gemäß einem der Ansprüche 1 bis 12 zu steuern; und
- zumindest eine Vorrichtung (100, 220, 230) gemäß einem der Ansprüche 1 bis 12.

## Claims

1. Apparatus for controlling a lighting means, the apparatus comprising one or more communication means (110, 110'), one or more security means (120) and one or more signal processing means (130, 130'), wherein the communication means (110, 110'), are configured to receive first data via at least one wireless communication network and to transmit second data via the at least one wireless communication network, wherein the communication means (110, 110') are further configured to at least partially forward the first data to the security means (120) or the signal processing means (130, 130'), wherein the first data comprise third data, and wherein the third data are at least partially encrypted with a symmetric, hybrid or asymmetric encryption method,
wherein the security means (120) are configured to decrypt the third data and to encrypt fourth data, wherein the second data are based on the encrypted fourth data, and
wherein the signal processing means (130, 130') are configured to control a lighting means (140) connected with the apparatus at least partially based on the decrypted third data, wherein the signal processing means (130, 130') are further configured to generate and/or receive the fourth data and to forward the received and/or generated fourth data to the security means (120) or the communication means (110, 110'),
**characterized in**
**that** the communication means (110, 110'), the signal processing means (130, 130') and the security means (120) in each case comprise a different hardware module and that a key for decrypting the third data and/or a key for encrypting the fourth data is/are programmed into, stored in and/or hardwired in the security means (120) such that it/they is/are not readably by the communication means (110, 110').

2. Apparatus according to claim 1, wherein the communication means and the signal processing means are connected to one another, wherein the communication means forward the first data via the connection between the communication means and the signal processing means, wherein the signal processing means forward the fourth data via the connection between the communication means and the signal processing means, and wherein the security means are arranged in the connection between the communication means and the signal processing means.

3. Apparatus according to one of claims 1 and 2, wherein the signal processing means (130, 130') and/or the security means (120) are further configured to reset the communication means (110, 110'), wherein the communication means (110,110') are configured to regularly transmit a status message to the signal processing means and/or the security means and/or regularly forward first data to the signal processing means, and wherein the signal processing means (130, 130') and/or the security means (120) cause(s) a reset of the communication means, if such regular transmission and/or forwarding is absent.

4. Apparatus according to one of claims 1 to 3, wherein the security means (120) are further configured to at least partially verify the integrity of the third data.

5. Apparatus according to one of claims 1 to 4, wherein the signal processing means (130, 130') are configured to receive sensor data from at least one sensor (150, 280) connected with the apparatus, and wherein the signal processing means (130, 130') are further configured to control the lighting means (140) connected with the apparatus at least partially based on the sensor data.

6. Apparatus according to claim 5, wherein the signal processing means (130, 130') are further configured to at least partially process the sensor data such that the sensor data are at least partially compressed, prepared, and/or evaluated, and wherein the fourth data at least partially comprise the processed sensor data.

7. Apparatus according to one of claims 1 to 6, wherein the communication means (110, 110') are further configured to receive the first data via a first wireless communication network and to transmit the second data via the first wireless communication network, and wherein the communication means are further configured to receive fifth data via a second wireless communication network and to transmit sixth data via the second wireless communication network.

8. Apparatus according to claim 7, wherein the second data are at least partially based on the fifth data, and wherein the sixth data are at least partially based on the first data.

9. Apparatus according to one of claims 1 to 8, wherein the different hardware modules are an electronic circuit, a processor and/or a programmable logic circuit respectively.

10. Apparatus according to claim 9, wherein the communication means (110, 110') comprise a first processor (111), and wherein the signal processing means (130, 130') comprise a second processor (131) and/or a FPGA circuit (136), and wherein the security means (120) comprise an encryption processor and/or a hardware security module.

11. Apparatus according to claim 10, wherein the first data comprise one or more computer programs with program instructions for the communication means (110, 110'), the signal processing means (130, 130') and/or the security means (120).

12. Apparatus according to one of claims 1 to 11, wherein the apparatus further comprises:
- one or more energy supply means (141), which are configured to supply the communication means (110, 110'), the signal processing means (130, 130') and the security means (120) and the lighting means (140) connected with the apparatus with energy, wherein the signal processing means (130, 130') are configured to at least partially control the energy supply of lighting means (140) by the energy supply means (141), wherein the energy supply means comprise:
- a power supply unit configured to supply the apparatus with energy, wherein the output voltage of the power supply unit is a direct voltage in the low voltage range between 0 and 120 Volts, and
- a driver circuit configured to provide power for operating the at least one lighting means connected with the apparatus, wherein the input voltage of the driver circuit is the output voltage of the power supply unit, and wherein the driver circuit is controllable by the signal processing means.

13. Method for controlling a lighting means, wherein the method is performed by an apparatus comprising one or more communication means (110, 110'), one or more security means (120) and one or more signal processing means (130, 130'), and wherein the method comprises:
- receiving (310, 610) first data via at least one wireless communication network by the communication means (110, 110'),
- transmitting (450, 520) second data via the at least one wireless communication network by the communication means (110, 110'),
- forwarding (320) the first data to the security means (120) or the signal processing means (130, 130'), wherein the first data comprise third data, and wherein the third data are at least partially encrypted with a symmetric, hybrid or asymmetric encryption method,
- decrypting (330) the third data by the security means (120),
- controlling a lighting means (340) at least partially based on the decrypted third data by the signal processing means (130, 130'),
- generating and/or receiving fourth data by the signal processing means (130, 130'),
- forwarding (430) the generated and/or received fourth data to the security means (120) or the communication means (110, 110') by the signal processing means (130, 130'), and
- encrypting (440) the fourth data by the security means (120), wherein the second data are based on the encrypted fourth data,
**characterized in**
**that** the communication means (110, 110'), the signal processing means (130, 130') and the security means (120) in each case comprise a different hardware module and that a key for decrypting the third data and/or a key for encrypting the fourth data is/are programmed into, stored in and/or hardwired in the security means (120) such that it/they is/are not readably by the communication means (110, 1 10')..

14. System, comprising:
- at least one central control apparatus (210), wherein the control apparatus is configured to control at least one apparatus according to one of claims 1 to 12; and
- at least one apparatus (100, 220, 230) according to one of claims 1 to 12.

## Revendications

1. Dispositif pour commander un moyen lumineux, le dispositif comprenant un ou plusieurs moyens de communication (110, 110'), un ou plusieurs moyens de sécurité (120) et un ou plusieurs moyens de traitement de signaux (130, 130'),
dans lequel les moyens de communication (110, 110') sont mis au point pour recevoir des premières données par l'intermédiaire d'au moins un réseau de communication sans fil et pour envoyer des deuxièmes données par l'intermédiaire de l'au moins un réseau de communication sans fil, dans lequel les moyens de communication (110, 110') sont mis au point en outre pour transférer les premières données aux moyens de sécurité (120) ou aux moyens de traitement de signaux (130, 130'), dans lequel les premières données comprennent des troisièmes données, et dans lequel les troisièmes données sont cryptées au moins en partie avec un procédé de cryptage symétrique, hybride ou asymétrique,
dans lequel les moyens de sécurité (120) sont mis au point pour décrypter les troisièmes données et pour crypter des quatrièmes données, dans lequel les deuxièmes données reposent sur les quatrièmes données cryptées, et
dans lequel les moyens de traitement de signaux (130, 130') sont mis au point pour commander un moyen lumineux (140) relié au dispositif au moins en partie en fonction des troisièmes données décryptées, dans lequel les moyens de traitement de signaux (130, 130') sont mis au point en outre pour générer et/ou obtenir les quatrièmes données et pour transférer les quatrièmes données obtenues et/ou générées aux moyens de sécurité (120) ou aux moyens de communication (110, 110'),
**caractérisé en ce que**
les moyens de communication (110, 110'), les moyens de traitement de signaux (130, 130') et les moyens de sécurité (120) comprennent respectivement au moins un module de matériel différent et une clé pour le décryptage des troisièmes données et/ou une clé pour le cryptage des quatrièmes données est/sont programmée(s), mémorisée(s) et/ou câblée(s) de telle manière dans les moyens de sécurité (120) qu'elle/elles ne peut/peuvent pas être lue(s) par les moyens de communication (110, 110').

2. Dispositif selon la revendication 1, dans lequel les moyens de communication et les moyens de traitement de signaux sont reliés les uns aux autres, dans lequel les moyens de communication transfèrent les premières données par l'intermédiaire de la liaison entre les moyens de communication et les moyens de traitement de signaux, dans lequel les moyens de traitement de signaux transfèrent les quatrièmes données par l'intermédiaire de la liaison entre les moyens de communication et les moyens de traitement de signaux, et dans lequel les moyens de sécurité sont disposés dans la liaison entre les moyens de communication et les moyens de traitement de signaux.

3. Dispositif selon l'une quelconque des revendications 1 et 2, dans lequel les moyens de traitement de signaux (130, 130') et/ou les moyens de sécurité (120) sont mis au point en outre pour réinitialiser les moyens de communication (110, 110'), dans lequel les moyens de communication (110, 110') sont mis au point pour envoyer régulièrement un message d'état aux moyens de traitement de signaux et/ou aux moyens de sécurité et/ou pour transférer régulièrement des premières données aux moyens de traitement de signaux et dans lequel les moyens de traitement de signaux (130, 130') et/ou les moyens de sécurité (120) peuvent donner lieu à une réinitialisation des moyens de communication en l'absence d'un tel envoi et/ou transfert régulier.

4. Dispositif selon l'une quelconque des revendications 1 à 3, dans lequel les moyens de sécurité (120) sont mis au point en outre pour vérifier au moins en partie l'intégrité des troisièmes données.

5. Dispositif selon l'une quelconque des revendications 1 à 4, dans lequel les moyens de traitement de signaux (130, 130') sont mis au point pour obtenir des données de capteur d'au moins un capteur (150, 280) relié au dispositif et dans lequel les moyens de traitement de signaux (130, 130') sont mis au point en outre pour commander au moins en partie en fonction des données de capteur le moyen lumineux (140) relié au dispositif.

6. Dispositif selon la revendication 5, dans lequel les moyens de traitement de signaux (130, 130') sont mis au point en outre pour traiter au moins en partie les données de capteur de telle manière que les données de capteur sont au moins en partie compressées, préparées et/ou évaluées, et dans lequel les quatrièmes données comprennent au moins en partie les données de capteur traitées.

7. Dispositif selon l'une quelconque des revendications 1 à 6, dans lequel les moyens de communication (110, 110') sont mis au point en outre pour recevoir les premières données par l'intermédiaire d'un premier réseau de communication sans fil et pour envoyer les deuxièmes données par l'intermédiaire du premier réseau de communication sans fil, et dans lequel les moyens de communication sont mis au point en outre pour recevoir des cinquièmes données par l'intermédiaire d'un deuxième réseau de communication sans fil et pour envoyer des sixièmes données par l'intermédiaire du deuxième réseau de communication sans fil.

8. Dispositif selon la revendication 7, dans lequel les deuxièmes données reposent au moins en partie sur les cinquièmes données et dans lequel les sixièmes données reposent au moins en partie sur les premières données.

9. Dispositif selon l'une quelconque des revendications 1 à 8, dans lequel les différents modules de matériel sont respectivement un circuit électronique, un processeur et/ou un circuit logique programmable.

10. Dispositif selon la revendication 9, dans lequel les moyens de communication (110, 110') comprennent un premier processeur (111), et dans lequel les moyens de traitement de signaux (130, 130') comprennent un deuxième processeur (131) et/ou un circuit FPGA [Field Programmable Gate Array - circuit intégré prédiffusé programmable] (136), et dans lequel les moyens de sécurité (120) comprennent un processeur de cryptage et/ou un module de sécurité de matériel.

11. Dispositif selon la revendication 10, dans lequel les premières données comprennent un ou plusieurs programmes informatiques avec des instructions de programme pour les moyens de communication (110, 110'), les moyens de traitement de signaux (130, 130') et/ou les moyens de sécurité (120).

12. Dispositif selon l'une quelconque des revendications 1 à 11, dans lequel le dispositif comprend en outre :
- un ou plusieurs moyens d'alimentation en énergie (141), qui sont mis au point pour alimenter en énergie les moyens de communication (110, 110'), les moyens de traitement de signaux (130, 130') et les moyens de sécurité (120) et le moyen lumineux (140) relié au dispositif, dans lequel les moyens de traitement de signaux (130, 130') sont mis au point pour commander au moins en partie l'alimentation en énergie du moyen lumineux (140) par les moyens d'alimentation en énergie (141), et dans lequel les moyens d'alimentation en énergie comprennent :
- une partie de réseau, qui est mise au point pour alimenter le dispositif en énergie, dans lequel la tension de sortie de la partie de réseau est une tension continue dans la plage de basses tensions entre 0 et 120 volts, et
- un circuit d'attaque, qui est mis au point pour fournir une puissance pour faire fonctionner le moyen lumineux relié au dispositif,
dans lequel la tension d'entrée du circuit d'attaque est la tension de sortie de la partie de réseau, et dans lequel le circuit d'attaque peut être commandé par les moyens de traitement de signaux.

13. Procédé pour commander un moyen lumineux, dans lequel le procédé est exécuté par un dispositif comprenant un ou plusieurs moyens de communication (110, 110'), un ou plusieurs moyens de sécurité (120) et un ou plusieurs moyens de traitement de signaux (130, 130'), et dans lequel le procédé comprend :
- la réception (310, 610) de premières données par l'intermédiaire d'au moins un réseau de communication sans fil par les moyens de communication (110, 110'),
- l'envoi (450, 520) de deuxièmes données par l'intermédiaire de l'au moins un réseau de communication sans fil par les moyens de communication (110,110'),
- le transfert (320) des premières données aux moyens de sécurité (120) ou aux moyens de traitement de signaux (130, 130'), dans lequel les premières données comprennent des troisièmes données, et dans lequel les troisièmes données sont cryptées au moins en partie avec un procédé de cryptage symétrique, hybride ou asymétrique,
- le décryptage (330) des troisièmes données par les moyens de sécurité (120),
- la commande d'un moyen lumineux (340) au moins en partie en fonction des troisièmes données décryptées par les moyens de traitement de signaux (130, 130'),
- la génération et/ou l'obtention de quatrièmes données par les moyens de traitement de signaux (130, 130'),
- le transfert (430) des quatrièmes données générées et/ou obtenues par les moyens de traitement de signaux (130, 130') aux moyens de sécurité (120) ou aux moyens de communication (110, 110'), et
- le cryptage (440) des quatrièmes données par les moyens de sécurité (120), dans lequel les deuxièmes données reposent sur les quatrièmes données cryptées,
**caractérisé en ce que**
les moyens de communication (110, 110'), les moyens de traitement de signaux (130, 130') et les moyens de sécurité (120) comprennent respectivement au moins un module de matériel différent et une clé pour le décryptage des troisièmes données et/ou une clé pour le cryptage des quatrièmes données est/sont programmée(s), mémorisée(s) et/ou câblée(s) de telle manière dans les moyens de sécurité (120) qu'elle/elles ne peut/peuvent pas être lue(s) par les moyens de communication (110, 110').

14. Système comprenant :
- au moins un dispositif de commande (210) central, dans lequel le dispositif de commande central est mis au point pour commander un ou plusieurs dispositifs selon l'une quelconque des revendications 1 à 12 ; et
- au moins un dispositif (100, 220, 230) selon l'une quelconque des revendications 1 à 12.
